# EUROPÄISCHE PATENTSCHRIFT

(11) **EP 3 837 108 B1**
(45) Veröffentlichungstag und Bekanntmachung des Hinweises auf die Patenterteilung: **12.02.2025**
(21) Anmeldenummer: 19753068.6
(22) Anmeldetag: 12.08.2019
(51) Int. Cl.: B29C 41/36, B29C 64/40, B33Y 10/00

(54) **VERFAHREN ZUM HERSTELLEN EINES DREIDIMENSIONALEN FORMGEGENSTANDS MITTELS SCHICHTWEISEM MATERIALAUFTRAG**
METHOD OF PRODUCING A THREE-DIMENSIONAL SHAPED ARTICLE BY MEANS OF LAYER-BY-LAYER MATERIAL APPLICATION
PROCÉDÉ DE FABRICATION D'UN OBJET MOULÉ TRIDIMENSIONNEL PAR DÉPÔT DE COUCHES SUCCESSIVES DE MATIÈRE

(30) Priorität: 15.08.2018 DE 102018006397
(43) Veröffentlichungstag der Anmeldung: 23.06.2021
(73) Patentinhaber: 3D Systems GmbH, 64546 Mörfelden-Walldorf (DE)
(72) Erfinder: MATHEA, Hans, 76344 Eggenstein-Leopoldshafen (DE)
(74) Vertreter: dompatent von Kreisler Selting Werner - Partnerschaft von Patent- und Rechtsanwälten mbB
(86) Internationale Anmeldenummer: PCT/EP2019/071610
(87) Internationale Veröffentlichungsnummer: WO 2020/035456

(56) Entgegenhaltungen:
- WO-A1-2015/092017
- WO-A1-2015/105047
- DE-A1- 102015 212 569
- DE-A1- 102016 122 131
- US-A1- 2013 011 562
- US-A1- 2016 355 694

## Beschreibung

Die Erfindung betrifft ein Verfahren zum Herstellen eines dreidimensionalen Formgegenstands mittels schichtweisem Materialauftrag, wobei Geometriedaten für den Formgegenstand, ein Trägerteil mit einer Basisfläche zur Aufnahme des dreidimensionalen Formgegenstands, ein verfestigbares flüssiges oder fließfähiges erstes Material, ein verfestigbares, flüssiges, fließfähiges, pastöses oder pulverförmiges zweites Material und ein Lösungsmittel bereitgestellt werden, in dem das verfestigte erste Material lösbar ist.

Bei einem derartigen, aus der Praxis bekannten Verfahren werden als erstes und zweites Material flüssige Polymere verwendet, die durch Einwirkung von ultravioletter Strahlung verfestigbar sind. Bei dem vorbekannten Verfahren wird auf die Basisfläche des Trägerteils zunächst eine erste Materialschicht aufgebracht, indem tröpfchenförmige Materialportionen des ersten und zweiten Materials mit Hilfe eines Tintenstrahldruckers auf unterschiedliche Stellen der Basisfläche aufgesprüht werden. Die Stellen an denen die aus den unterschiedlichen Materialien bestehenden Materialtröpfchen auf die Basisfläche aufgetragen werden, werden in Abhängigkeit von bereitgestellten Geometriedaten für den herzustellenden Formgegenstand derart gewählt, dass die aus dem zweiten Material bestehenden Bereiche der Materialschicht eine unterste Schicht des herzustellenden Formgegenstands bilden. Das erste Material dient als Stützmaterial, welches an Stellen auf die Basisfläche aufgebracht wird, an denen kein zweites Material aufgetragen wird und über denen der Formgegenstand nach dem Auftragen einer weiteren Materialschicht des ersten Materials Überhänge aufweist, die bis zum Verfestigen aller Materialschichten durch das Stützmaterial unterstützt werden sollen. Die so erhaltene unterste Materialschicht wird in einem weiteren Schritt mit ultravioletter Strahlung bestrahlt, um in dem ersten und dem zweiten Material enthaltene Polymere durch Vernetzen zu verfestigen.

Nachdem die unterste Materialschicht fertiggestellt wurde, werden auf diese in entsprechender Weise weitere Materialschichten aufgebracht und verfestigt, bis alle Schichten des Formgegenstands hergestellt und verfestigt sind. Danach wird der so erhaltene Schichtstapel mit dem Lösungsmittel in Kontaktgebracht, bis sich das erste Material darin aufgelöst hat. Das zweite Material ist in dem Lösungsmittel nicht löslich.

Das vorbekannte Verfahren ermöglicht es zwar, dreidimensionale Formgegenstände als Prototypen oder in kleinen Stückzahlen vergleichsweise kostengünstig herzustellen. Durch die Verwendung UV vernetzbarer Polymere und die hohe Auflösung beim Drucken wird eine gute Oberflächenqualität ermöglicht. Für das hochaufgelöste 3D-Drucken ist jedoch eine sehr niedrige Viskosität der Polymere erforderlich, damit diese durch feine Düsen hindurch auf die Basisfläche bzw. eine darauf befindliche, verfestigte Materialschicht aufgetragen werden können.

Beim Tintenstrahldruckverfahren (InkJet-Verfahren) können die Düsen üblicherweise eine maximale Viskosität von 25 mPa·s verarbeiten. Höhere Viskositäten sind in der Regel nicht verjettbar. Die aus solchen Materialien erstellte Objekte sind nur minimal belastbar und können lediglich als Anschauungsobjekt dienen.

Aus der Praxis ist auch bereits bekannt, eine Spritzgießform für eine Spritzgießmaschine mittels schichtweisem Materialauftrag aus einem verfestigbaren flüssigen Polymer mittels eines Tintenstrahl-3D-Druckers herzustellen. Die Spritzgießform hat zwei Formteile, zwischen denen eine Kavität gebildet ist, die eine dreidimensionale Negativform eines in der Spritzgießmaschine herzustellenden Formgegenstands aufweist. Die Spritzgießform wird in dem 3D-Drucker durch Auftragen einer Vielzahl von Schichten aus dem Polymer hergestellt, welches mit Hilfe von Düsen in flüssiger Form auf eine Basisfläche bzw. eine darauf zuvor aufgebrachte, verfestigte Materialschicht aufgetragen wird. Nach dem Auftragen jeder Materialschicht wird das noch flüssige Polymer jeweils mit UV-Licht bestrahlt, um es zu vernetzen und dadurch die betreffende Materialschicht zu verfestigen. Dann werden in entsprechender Weise weitere Materialschichten aufgetragen und verfestigt, bis die Spritzgießform fertiggestellt ist. Anschließend wird die Spritzgießform aus dem 3D-Drucker entnommen und in die Spritzgießmaschine eingebaut, um durch in der Spritzgießform vorgesehene Einspritzöffnungen hindurch einen sich von dem Polymer unterscheidenden, heißen Kunststoff in die Kavität einzuspritzen. Nach dem die Kavität mit dem Kunststoff befüllt und der Kunststoff abgekühlt ist, wird die Spritzgießform geöffnet und der Formgegenstand wird mit Hilfe von Auswerfern aus der Kavität ausgeworfen. Das Verfahren hat den Nachteil, dass im 3D Druck hergestellte Formen wegen der hohen Temperatur des Befüll-Materials nur eine sehr begrenzte Lebensdauer haben und nach ca. 10 bis 100 Spritzgießvorgängen erneuert werden müssen. Ferner ist der Einbau der Spritzgießform in die Spritzgießmaschine relativ zweitaufwändig ist. Die ist insbesondere bei einer Einzelanfertigung eines Formgegenstands ungünstig.

Bei anderen bekannten Technologien, die Feststoffe als Baumaterial verwenden, werden meistens Thermoplaste geschmolzen und durch eine Düse, oder in Form von Pulver im Sinter-Verfahren schichtweise aufgetragen. Die recht gute Belastbarkeit geht allerdings auf Kosten der Druckzeit (sehr langsam), oder einer niedrigen Auflösung bzw. Oberflächenqualität.

Einen leichten Vorteil bietet das Stereolithografie-Verfahren, mit dem auch höhere Viskositäten verarbeiten werden können. Dieser Vorteil ergibt sich aus der Tatsache, dass die Materialien nicht durch eine Düse versprüht werden müssen, sondern mit einem externen UV-Strahl nach Vorgabe in einem Polymer-Behälter vernetzt werden. Auch sogenannte zwei Komponenten UV-Polymere mit noch gesteigerten Eigenschaften lassen sich damit verarbeiten. Dadurch wird auch eine bessere Belastbarkeit der Formgegenstände erreicht. Die Nachteile sind allerdings: große Materialmengen zum Erstelleneines Objekts, limitierte Aushärtungszeit des 2K-Gemischs, hoher Materialverbrauch (erlaubt keinen erneuten Einsatz der nicht verbrauchten Polymere). All das treibt die die Kosten der Teileherstellung deutlich in die Höhe.

Bis auf das InkJet-Verfahren weisen alle bekannten 3D Technologien noch ein anderes gravierendes Manko auf: sie sind nicht Multimaterialfähig. Dies bedeutet, dass lediglich ein Materialtyp gleichzeitig verwendet werden kann. Hierdurch wird die Verwendbarkeit des Verfahrens in der Industrie sehr limitiert.

Aus der WO 2015/105047 A1 ist ein Verfahren zum Herstellen eines dreidimensionalen Formgegenstands mittels schichtweisem Materialauftrag bekannt, bei dem ein Trägerteil mit einer Basisfläche zur Aufnahme des dreidimensionalen Formgegenstands, ein erstes Material, ein zweites Material und ein Lösungsmittel bereitgestellt werden, in dem das verfestigte erste Material lösbar ist. Bei dem Verfahren werden zum Herstellen der einzelnen Formgegenstands-Schichten jeweils gleichzeitig Materialportionen des ersten und zweiten Materials derart auf die Basisflache bzw. eine darauf befindliche verfestigte Materialschicht des dreidimensionalen Formgegenstands aufgebracht, dass aus dem ersten Material eine Opferschicht und aus dem zweiten Material eine äußere Schicht des Formgegenstands erzeugt werden. Die äußere Schicht des Formgegenstands hat einen an die Opferschicht angrenzenden äußeren Rand sowie einen inneren Rand, der eine Kavität umgrenzt. Nach dem Verfestigen der äußeren Schicht und der Opferschicht wird die Kavität mit einem pulverförmigen dritten Material befüllt, das anschließend mit einer Bindertinte in Kontakt gebracht wird, um das pulverförmige Material zu verfestigen und mit der äußeren Schicht und gegebenenfalls der unter dem pulverförmigen Material befindlichen bereits verfestigten Schicht zu verbinden. Nachdem alle Formgegenstandsschichten auf diese Weise hergestellt wurden, wird die Opferschicht in einem weiteren Verfahrensschritt durch Lösen in dem Lösungsmittel entfernt.

Bei einem aus der DE 10 2015 212 569 A1 bekannten Verfahren, wird zunächst auf eine Basisfläche durch mehrmaliges schichtweises Ablegen und Verfestigen eines ersten Materials eine Objekthüllenwand hergestellt, die eine Kavität aufweist. Danach wird die Kavität mit einem sich verfestigenden zweiten Material befüllt. In einem dritten Verfahrensschritt wird ein vertikal über den Objekthüllenrand emporragender, verfestigter Füllmaterialbereich abgetragen, so dass eine mit dem Formhüllenrand bündig abschließende, verfestigte Füllmaterialoberfläche gebildet wird. Der Vorgang des schichtweisen Abscheidens und Verfestigen des ersten Materials wird längs des oberen Objekthüllenrands fortgesetzt und in den von dem auf diese Weise erhöhten Objekthüllenrand umgrenzten Raum wird weiteres Füllmaterial eingefüllt. Der danach über den Objekthüllenrand emporragende, verfestigte Füllmaterialbereich wird in einem weiteren Verfahrensschritt abgetragen. Diese Schritte werden solange wiederholt, bis eine gewünschte Höhe des Formgegenstands erreicht wurde.

Aus der US 2013/0011562 A1 ist ein Verfahren zum Herstellen eines dreidimensionalen Formgegenstands mittels schichtweisem Materialauftrag bekannt, bei dem die einzelnen Materialschichten jeweils durch Auftragen eines ersten Materials hergestellt werden. Nach dem Auftragen einer Materialschicht wird jeweils ein Teilbereich der Materialschichten wieder abgetragen. Dieser Teilbereich wird mit einem zweiten Material befüllt, das in einem Lösungsmittel lösbar ist. Danach wird die Dicke der so erhaltenen Schicht auf ein gewünschtes Maß reduziert. In entsprechender Weise werden weitere Materialschichten hergestellt, bis sämtliche Schichten des Formgegenstands fertiggestellt sind. In einem weiteren Verfahrensschritt wird das zweite Material wird durch Inkontaktbringen mit dem Lösungsmittel entfernt.

Aufgabe der Erfindung ist daher, ein Verfahren der eingangs genannten Art anzugeben, mit dem mechanisch stabile und belastbare dreidimensionale Formgegenstände mit hoher Auflösung gedruckt werden können.

Diese Aufgabe wird mit den Merkmalen des Patentanspruchs 1 gelöst. Erfindungsgemäß ist ein Verfahren zum Herstellen eines dreidimensionalen Formgegenstands mittels schichtweisem Materialauftrag vorgesehen, bei dem Geometriedaten für den Formgegenstand, ein Trägerteil mit einer Basisfläche zur Aufnahme des dreidimensionalen Formgegenstands, ein verfestigbares, flüssiges oder fließfähiges erstes Material, ein verfestigbares, flüssiges, fließfähiges, pastöses oder pulverförmiges zweites Material und ein Lösungsmittel bereitgestellt werden, wobei das zweite Material im verfestigten Zustand eine höhere Festigkeit aufweist als das verfestigte erste Material, wobei das verfestigte erste Material in dem Lösungsmittel lösbar ist,
a) wobei zur Bildung einer aus dem ersten Material bestehenden Negativform-Schicht Materialportionen des fließfähigen ersten Materials derart entsprechend den Geometriedaten auf die Basisfläche und/oder eine darauf befindliche verfestigte Materialschicht des dreidimensionalen Formgegenstands aufgebracht werden, dass die Negativform-Schicht an ihrer der Basisfläche abgewandten Oberfläche mindestens eine Kavität hat, welche eine Negativform einer herzustellenden Materialschicht des Formgegenstands aufweist,
b) wobei die Negativform-Schicht verfestigt wird,
c) wobei zur Bildung einer Formgegenstands-Schicht die Kavität derart mit dem zweiten Material befüllt wird, dass die Negativform durch Abformen des verfestigten ersten Materials als Positivform auf die Formgegenstands-Schicht übertragen wird,
d) wobei das in die Kavität eingefüllte zweite Material verfestigt wird,
e) wobei über eine in einem vorbestimmten Abstand zur Basisfläche angeordnete Ebene überstehende Bereiche der verfestigten Negativform-Schicht und/oder der verfestigten Formgegenstands-Schicht durch spanabhebenden Materialabtrag entfernt werden,
f) wobei die Schritte a) bis e) mindestens ein Mal wiederholt werden,
g) wobei die Negativform-Schichten derart mit dem Lösungsmittel in Kontakt gebracht werden, dass sich das verfestigte erste Material in dem Lösungsmittel löst.

Erfindungsgemäß ist also ein Hybridverfahren vorgesehen, bei dem Materialien mit unterschiedlichen Eigenschaften mittels unterschiedlicher Druck-Verfahren verarbeitet und/oder mittels unterschiedlicher Druckvorrichtungen auf die Basisfläche bzw. eine darauf befindliche, verfestigte Materialschicht des dreidimensionalen Formgegenstands schichtweise aufgetragen werden. Dies kann in einem durchgehenden 3D-Druckprozess erfolgen, d.h. das Verfahren kann komplett in einer 3D-Druckstation durchgeführt werden. Außerhalb der 3D-Druckstation ist kein weiterer Herstellungs-Prozess notwendig.

Das erste Material kann sehr niedrigviskos bzw. dünnflüssig oder hochfließfähig sein, weil es lediglich zur Herstellung einer Form für das zweite Material dient. Durch die niedrige Viskosität bzw. die hohe Fließfähigkeit, die das erste Material während des Auftragens auf die Basisfläche bzw. eine darauf befindliche, bereits verfestigte Materialschicht des dreidimensionalen Formgegenstands aufweist, kann die Form mittels eines digitalen Druckverfahrens mit hoher Auflösung und Oberflächenqualität gedruckt werden, indem eine Vielzahl entsprechend kleiner Materialportionen des ersten Materials auf die Basisfläche bzw. die darauf befindliche, verfestigte Materialschicht des dreidimensionalen Formgegenstands aufgetragen wird.

An die mechanische Stabilität und Festigkeit der aus dem ersten Material bestehenden Materialschicht der Form werden nur geringe Anforderungen gestellt, da die Form lediglich das zweite Material tragen und eventuelle, bei dem zum Auftragen des zweiten Materials vorgesehenen Druckverfahren auf das erste Material ausgeübten Kräfte abstützen muss. Durch die Verfestigung des ersten Materials erreicht dieses eine ausreichende Festigkeit, um als Formgeber für das zweite Material dienen zu können. Die mechanische Festigkeit des im verfestigten Zustand befindlichen ersten Materials hat keinen Einfluss auf die mechanische Stabilität des aus den verfestigten Schichten des zweiten Materials gebildeten Formgegenstands, weil das erste verfestigte Material nach Auftragen aller Materialschichten durch Auflösen in dem Lösungsmittel von dem Formgegenstand entfernt wird. Das verfestigte zweite Material ist in dem Lösungsmittel unlösbar.

Das zweite Material ist das eigentliche Baumaterial für den Formgegenstand und kann andere Eigenschaften, vor allem eine höhere Viskosität aufweisen als das erste Material. Da das zweite Material durch Abformen der aus dem ersten Material hergestellten Form geometrisch geformt wird, ist es zum Erzielen einer hohen Druckauflösung nicht notwendig, kleine Materialportionen des zweiten Materials auf die Basisfläche bzw. die darauf befindliche, verfestigte Materialschicht des dreidimensionalen Formgegenstands aufzubringen. Vielmehr kann auch mit einem hochviskosen zweiten Material gearbeitet werden. Hierdurch kann eine hohe mechanische Stabilität und Festigkeit des Formgegenstands erreicht werden. Bei Bedarf ist es sogar möglich, dass das zweite Material ein Gemisch aus mindestens zwei unterschiedlichen hochviskosen Stoffen und/oder wenigstens ein Additiv zur Erhöhung der Materialfestigkeit enthält. Das zweite Material kann auch mit einem digitalen Druckverfahren auf die Basisfläche bzw. die darauf befindliche, verfestigte Materialschicht des dreidimensionalen Formgegenstands selektiv aufgetragen werden, also durch Auftragen einer Vielzahl von Materialportionen auf unterschiedliche Stellen, die entsprechend den für den Formgegenstand bereitgestellten Geometriedaten gewählt werden. Es ist aber auch möglich, das zweite Material mit einem analogen Druckverfahren auf die Basisfläche bzw. die darauf befindliche, verfestigte Materialschicht des dreidimensionalen Formgegenstands aufzutragen. Dabei ist es sogar möglich, zwei oder mehr Komponenten des zweiten Materials auf die Basisfläche und/oder eine darauf befindliche verfestigte Materialschicht aufzutragen, um einen Formgegenstand herzustellen, der mehrere unterschiedliche Komponenten enthält. Diese Art der Multimaterialfähigkeit kann durch Hintereinanderschaltung von mehreren Druckmodulen für das zweite Material erreicht werden. So können unterschiedliche mechanische und/oder elektrische Eigenschaften und/oder unterschiedliche Farben erzielt werden.

Da bei dem erfindungsgemäßen Verfahren vorzugsweise nach dem Drucken jeder einzelnen Materialschicht jeweils über eine in einem vorbestimmten Abstand zur Basisfläche, vorzugsweise parallel zu dieser angeordnete Ebene überstehende Bereiche der verfestigten Negativform-Schicht und/oder der verfestigten Formgegenstands-Schicht durch spanabhebenden Materialabtrag entfernt werden, verlaufen die einzelnen Schichten des Formgegenstands exakt parallel bzw. sind in einer vorbestimmten Anordnung zueinander angeordnet und weisen eine vorbestimmte Schichtdicke auf. Außerdem werden durch den spanabhebenden Materialabtrag "Verschmutzungen", die beim Befüllen der Kavitäten mit dem zweiten Material an der Oberfläche der obersten verfestigten Schicht des ersten Materials auftreten können, wenn das zweite Material mit dieser Oberfläche in Berührung gerät, entfernt. Das Abtragen der über die Ebene überstehenden Bereiche sorgt also dafür, dass die aus dem verfestigten ersten und zweiten Material bestehende Mixschicht immer die gewünschte Dicke aufweist und an der Oberfläche des ersten Materials frei von in dem Lösungsmittel unlösbarem zweitem Material ist. Dies ermöglicht eine sehr genaue und verzerrungsarme Herstellung des Formgegenstands. Der spanabhebende Materialabtrag erfolgt bevorzugt mittels eines sogenannten Dickenfräsers / Polierers. Bevorzugt wird Schritt e) des Patentanspruchs 1 jeweils nach dem Aufbringen jeder einzelnen Materialschicht des ersten Materials durchgeführt. Die über die in dem vorbestimmten Abstand zur Basisfläche angeordnete Ebene überstehende Bereiche der verfestigten Negativform-Schicht und/oder der verfestigten Formgegenstands-Schicht werden bevorzugt vollständig entfernt. Somit schließen nach dem Entfernen der überstehenden Bereiche sowohl die oberste Negativform-Schicht als auch die oberste Formgegenstands-Schicht jeweils bündig an die im vorbestimmten Abstand zur Basisfläche angeordnete Ebene an.

Bei dem erfindungsgemäßen Verfahren werden die über die in dem vorbestimmten Abstand zur Basisfläche vorzugsweise parallel zu dieser angeordnete Ebene überstehenden Bereiche der verfestigten Negativform-Schicht und der verfestigten Formgegenstands-Schicht nach jedem Auftragen einer Formgegenstands-Schicht durch spanabhebenden Materialabtrag entfernt. Mit Hilfe des erfindungsgemäßen Verfahrens können daher Formgegenstände komplett in einem Drucker gefertigt werden - ohne, dass es eines anderen Prozesses bedarf.

Bei einer bevorzugten Ausgestaltung der Erfindung werden die Materialportionen des ersten Materials vorzugsweise mittels eines Tintenstrahl-Druckverfahrens oder mittels Elektrofotografie auf die Basisfläche und/oder die darauf befindliche verfestigte Negativform-Schicht und/oder eine verfestigte Formgegenstands-Schicht aufgebracht, wobei das erste Material ein durch Einwirkung von Energie verfestigbares Material ist, das zum Verfestigen der Negativform-Schicht mit der Energie beaufschlagt wird. Bevorzugt ist auch das zweite Material ein durch Einwirkung von Energie verfestigbares Material, welches nach dem Einfüllen in die Kavität mit der Energie beaufschlagt wird. Die Energie kann insbesondere eine Strahlung und bevorzugt optische Strahlung, wie UV-Strahlung umfassen.

Bei einer vorteilhaften Ausführungsform des Verfahrens ist die Viskosität des zweiten Materials im unverfestigten Zustand höher, gegebenenfalls mindestens 10 mal so hoch, insbesondere mindestens 200 mal so hoch und bevorzugt mindestens 2000 mal so hoch wie die Viskosität des ersten Materials im unverfestigten Zustand und/oder dass das fließfähige erste und das fließfähige, pastöse oder pulverförmige zweite Material weisen einen Feststoffanteil auf, wobei der Feststoffanteil des zweiten Materials im unverfestigten Zustand dieses Materials höher, gegebenenfalls mindestens 10 mal so hoch, insbesondere mindestens 200 mal so hoch und bevorzugt mindestens 2000 mal so hoch ist wie der Feststoffanteil des ersten Materials in dessen unverfestigtem Zustand. Dies ermöglicht die Herstellung eines Formgegenstands, der eine hohe Oberflächenqualität und -genauigkeit und gleichzeitig eine ausgezeichnete mechanische Festigkeit aufweist. Des Weiteren kann das zweite Material mit Feststoffanteil (Additiven) in sphärischer, oder faserähnlicher Form bereitgestellt werden, welche die mechanischen und/oder elektrischen Eigenschaften gegenüber einem entsprechenden Material ohne Feststoffanteile deutlich steigern.

Bei einer zweckmäßigen Ausgestaltung der Erfindung hat erste Material eine zum Verjetten geeignete Arbeits-Viskosität, die geringer als 1000 mPa·s, insbesondere geringer als 100 mPa·s, gegebenenfalls geringer als 30 mPa·s und bevorzugt geringer als 10 mPa·s ist und wird in Form von Flüssigkeitströpfchen mit einer Auflösung von mindestens 360 dpi (254 dpi = 100 dpc), insbesondere mindestens 720 dpi und bevorzugt mindestens 1440 dpi auf die Basisfläche und/oder die darauf befindliche verfestigte Materialschicht des dreidimensionalen Formgegenstands aufgebracht. Dies ermöglicht eine hohe Oberflächenqualität des Formgegenstands. Das zweite Material wird bevorzugt gegenüber der Raumtemperatur auf eine Arbeitstemperatur erwärmt, um seine Fließfähigkeit zu verändern, vorzugsweise um diese zu erhöhen bzw. die Viskosität zu verringern. Danach wird das auf Arbeitstemperatur erwärmte zweite Material auf die Basisfläche bzw. eine darauf befindliche verfestigte Materialschicht aufzutragen.

Bei einer Weiterbildung der Erfindung wird das zweite Material mittels eines selektiven, digitalen Beschichtungs-/Dosierungsverfahrens derart in Abhängigkeit von den Geometriedaten auf die Negativform-Schicht aufgetragen, dass zumindest eine Materialportion des fließfähigen, pastösen oder pulverförmigen zweiten Materials in die mindestens eine Kavität abgegeben wird und vorzugsweise außerhalb der Kavität befindliche Stellen der Negativform-Schicht nicht oder nur geringfügig mit dem zweiten Material in Kontakt gebracht werden. Das zweite Material wird also bevorzugt nur an die Stellen abgegeben, an denen Kavitäten sind. Das Einfüllen des zweiten Materials in die Kavitäten kann mit Hilfe von Düsen erfolgen, die mittels eines Ventils oder dergleichen Stelleinrichtung in eine Offen- und eine Schließstellung verstellbar sind. Die Synchronisierung der Ventile in Abhängigkeit von der Relativposition zwischen den Kavitäten und den Abgabeöffnungen der Düsen kann mittels einer Steuerung erfolgen. Dies ist ein Vorteil im Vergleich zu den analogen Beschichtungsverfahren, bei denen das zweite Material großflächig sowohl innerhalb als auch außerhalb der Kavitäten aufgetragen wird. Das zweite Material kann beim Einfüllen in die Kavitäten eine andere Eigenschaft aufweisen als das erste Material, insbesondere kann das zweie Material eine höhere Viskosität haben als die Viskosität, die des erste Material hat, wenn es auf die Basisfläche bzw. eine darauf befindliche, verfestigte Materialschicht des dreidimensionalen Formgegenstands aufgetragen wird.

Bei einer bevorzugten Ausgestaltung der Erfindung ist das zweite Material ein Komposit, welches ein Fluid und wenigstens ein Additiv umfasst, wobei das Fluid bei Raumtemperatur eine Viskosität von mindestens 50 mPa·s und vorzugsweise von mindestens 1000 mPa·s aufweist, und wobei das Additiv Feststoffpartikel aufweist, die in dem Fluid angeordnet sind. Die Feststoffpartikel können Fasern, insbesondere Carbonfasern, Nanotubes, Glaskugeln, Graphen, Styrolblockcopolymere, insbesondere Styrol-Ethylen-Butylen-Styrol (SEBS), Nano/Mikro-Partikel von Feststoffen als Füllstoffe und/oder hochverzweigte Polyesterole und/oder deren Abmischungen umfassen. Das Komposit kann bei Zimmertemperatur oder aufgeheizt bei einer höheren Temperatur als der Zimmertemperatur in die Kavität(en) eingefüllt werden.

Bei einer bevorzugten Ausgestaltung der Erfindung weist das zweite Material eine höhere Viskosität und/oder einen höheren Feststoffanteil auf als das erste Material, wobei sowohl das erste als auch das zweite Material mittels eines Tintenstrahldruckverfahrens auf die Basisfläche und/oder eine darauf befindliche verfestigte Negativform-Schicht und/oder Formgegenstands-Schicht aufgebracht werden, wobei bei dem Tintenstrahl-Druckverfahren das erste Material aus mindestens einer ersten Düse und das zweite Material aus wenigstens einer zweiten Düse ausgestoßen werden, und wobei die Austrittsöffnung der zweiten Düse einen größeren Querschnitt aufweist und/oder mit einem höheren Arbeitsdruck beaufschlagt wird als die Austrittsöffnung der ersten Düse, wobei insbesondere der Durchmesser der Austrittsöffnung der zweiten Düse größer ist als derjenige der Austrittsöffnung der ersten Düse. Unter einem Tintenstrahldruckverfahren wird ein Druckverfahren verstanden, bei dem das zweite Material mittels eines Piezoelektrischen Aktivators pulsartig und/oder portionsweise aus der Düse ausgestoßen wird (Jetten). Durch den größeren Querschnitt und/oder höheren Arbeitsdruck der zweiten Düse wird das Tintenstrahl-Drucken des hochviskosen zweiten Materials ermöglicht. Der im Vergleich zum Querschnitt der Austrittsöffnung der zweiten Düse kleinere Querschnitt der Austrittsöffnung der ersten Düse und/oder der im Vergleich zum Arbeitsdruck der ersten Düse höhere Arbeitsdruck der zweiten Düse ermöglicht es, das erste Material hochaufgelöst auf die Basisfläche bzw. eine darauf befindliche, verfestigte Materialschicht des dreidimensionalen Formgegenstands aufzutragen.

Die Düsen werden in kleiner Distanz zu der Oberfläche platziert, auf der das zweite Material aufgetragen werden soll. Wenn sich unter der Düse eine Kavität befindet, wird der Fluss des zweiten Materials aus dem Material-Kanal der Düse aktiviert. Das zweite Material wird aus der Düse gepresst und bei relativ zur Düse bewegter Oberfläche wird ein Streifen des zweiten Materials auf dieser abgelegt. Nach Deaktivieren des Materialnachschubes bewegt sich die Düse ohne Materialabgabe über die Oberfläche.

Bei einer Weiterbildung der Erfindung wird das zweite Material mit einem Gasdruck beaufschlagt und das auf diese Weise unter Druck gesetzte zweite Material wird über wenigstens ein Ventil zu mindestens einer Düse geleitet, wobei die Austrittsöffnung der Düse entlang der Basisfläche relativ zu dem Trägerteil positioniert und das Ventil derart in Abhängigkeit von den für den herzustellenden Formgegenstand bereitgestellten Geometriedaten und in Abhängigkeit von der Relativposition zwischen der Düse und dem Trägerteil angesteuert wird, dass der Materialfluss freigegeben wird, wenn die Austrittsöffnung an der Kavität positioniert ist, und der Materialfluss gesperrt wird, wenn die Austrittsöffnung nicht an der Kavität positioniert ist. Dabei kann das Ventil elektromagnetisch oder mittels eines Piezoelements betätigt werden.

Bevorzugt wird die Austrittsöffnung einer Düse entlang einer kontinuierlichen, innerhalb der Kavität verlaufenden Linie relativ zum Trägerteil bewegt und das flüssige, fließfähige oder pastöse zweite Material wird kontinuierlich entlang dieser Linie von der Austrittsöffnung in die Kavität abgegeben. Dies ermöglicht einen kontinuierlichen Materialauftrag und somit einen schnellen Arbeitsfortschritt beim Befüllen der Kavität(en) mit dem zweiten Material. Das zweite Material kann mittels einer an sich bekannten, für einen kontinuierlichen Förderprozess geeigneten Mikropumpe oder durch Beaufschlagen des zweiten Materials mit einem Gasdruck der Düse zugeführt werden. Das Hinausbefördern des zweiten Materials aus dem Düsen-Kanal erfolgt entweder direkt durch einen Piezo-Aktivator für hohe Viskositäten, durch einen Piezo-Aktivator für einen Düsen-Kanal-Schieber (schließt/öffnet den Düsen-Kanal) oder wird durch Druckluft in den Kanal gepresst. Die Druckluft kann dabei durch ein Magnetventil elektromagnetisch aktiviert werden.

Bei einer vorteilhaften Ausführungsform der Erfindung wird eine Trägerfolie bereitgestellt, auf der das zweite Material angeordnet ist, wobei das zweite Material eine höhere Viskosität aufweist als das erste Material und/oder mit einem höheren Feststoffanteil enthält ist als das erste Material, wobei die Trägerfolie zum Befüllen der Kavität mit dem zweiten Material derart an der Kavität positioniert wird, dass das auf der Trägerfolie befindliche zweite Material der Kavität zugewandt ist, wobei ein Energiestrahl, für den die Trägerfolie durchlässig ist, derart auf die Trägerfolie gerichtet wird, dass das zweite Material auf der der Kavität zugewandten Seite der Trägerfolie durch Erhitzen verflüssigt und in die Kavität abgegeben wird. Das zweite Material wird also mittels eines Transferdruckverfahrens vorzugsweise selektiv in die Kavitäten eingefüllt. Als Energiestrahl wird bevorzugt ein Laserstrahl verwendet. Es ist aber auch denkbar, dass der Energiestrahl ein Elektronenstrahl ist. Der Energiestrahl kann während des Materialauftrags aus eine Neutrallage abgelenkt werden, um ihn an unterschiedlichen Stellen der Trägerfolie zu positionieren. Die Ablenkung kann in Abhängigkeit von den bereitgestellten Geometriedaten für den Formgegenstand und in Abhängigkeit von der Relativposition zwischen dem in Neutrallage befindlichem Energiestrahl und dem Trägerteil erfolgen. Bei einem Laserstrahl kann die Ablenkung mittels einer verstellbaren Optik, insbesondere eines Galvanospiegels und/oder eines Polygonspiegels erfolgen. Wenn als Energiestrahl ein Elektronenstrahl verwendet wird, wird dieser zweckmäßigerweise durch ein Magnetfeld abgelenkt.

Bei einer Weiterbildung der Erfindung wird das zweite Material mittels eines Flexodruck-, Tiefdruck-, Offsetdruck-, Siebdruck-, Lasertransfer-, Mikrodosierungsverfahrens, mittels eines Rakels oder Kammerrakels in die Kavität eingefüllt. Das zweite Material wird also mit einem analogen Druckverfahren die Kavität(en) eingefüllt. Dies ermöglicht durch die flächige Bedruckung eine hohe Druckgeschwindigkeit.

Bei einer weiteren vorteilhaften Ausführungsform der Erfindung ist das zweite Material ein Thermoplast, welches durch Erhitzen verflüssigt, dann in die Kavität eingefüllt und danach durch Abkühlen verfestigt wird. Hierbei wird keine UV-Strahlungsquelle zum Verfestigen des zweiten Materials benötigt, sondern dieses wird nur abgekühlt.

Zweckmäßigerweise werden die oberste verfestigte Negativform-Schicht und/oder die oberste verfestigte Formgegenstands-Schicht von den bei dem spanabhebenden Materialabtrag auftretenden Spänen gereinigt. Somit ergibt sich eine ebene und saubere Oberfläche auf die mit großer Präzision eine weitere Materialschicht aufgetragen werden kann.

Bei einer bevorzugten Ausführungsform der Erfindung wird das die Basisfläche aufweisende Trägerteil während des Materialauftrags und gegebenenfalls während des Verfestigens der Materialien um eine Rotationsachse gedreht und vorzugsweise entlang der Rotationsachse verschoben. Hierdurch ist ein unterbrechungsfreies Drucken einer Vielzahl von übereinander angeordneter Materialschichten möglich. Dies ermöglicht einen schnellen Materialauftrag. Wenn das zweite Material mittels eines Transferdruckverfahrens in die Kavität eingefüllt wird, kann der Energiestrahl nacheinander an mehreren Materialabgabestellen der Trägerfolie positioniert werden, die jeweils über einer ihnen zugeordneten Auftragungsstelle für das Material angeordnet sind, um das auf der Trägerfolie befindliche zweite Material mittels des Energiestrahls derart zu erhitzen, dass das in die an der Auftragungsstelle befindliche Kavität übertragen wird, wobei die Leistung des Energiestrahls derart eingestellt wird, dass beim Positionieren des Energiestrahls an einer ersten Materialabgabestelle, die weiter von der Rotationsachse entfernt ist als eine zweite Materialabgabestelle, der Energiestrahl eine größere Leistung hat als beim Positionieren des Energiestrahls an der zweiten Materialabgabestelle. Diese Leistungsanpassung hat den Vorteil, dass an jeder Materialabgabestelle die gleiche Materialmenge abgegeben wird. Dies ist vorrangig beim Einsatz auf einer Drehplattform notwendig bei dem der Innendurchmesser kleiner als der Außendurchmesser ist, was in Folge einen schmaleren Strahl auf der Innenseite als auf der Außenseite erforderlich macht.

Nachfolgend sind Ausführungsbeispiele der Erfindung anhand der Zeichnungen näher erläutert. Es zeigt:
- Fig. 1: eine bevorzugte Vorrichtung in polarer Ausführung, zum Herstellen eines dreidimensionalen Formgegenstands mittels schichtweisem Materialauftrag, wobei die Vorrichtung unterschiedliche Abgabeeinrichtungen zur Abgabe unterschiedlicher flüssiger und verfestigbarer Materialien hat,
- Fig. 2: eine Seitenansicht einer Vorrichtung zum Herstellen eines dreidimensionalen Formgegenstands, wobei die Vorrichtung eine erste Abgabeeinrichtung aufweist, die Düsen zum schichtweisen Auftragen eines flüssigen ersten Materials und eine als Flexo- oder Tiefruckvorrichtung ausgestaltete zweite Materialauftragungsstation zum Auftragen eines flüssigen zweiten Materials hat,
- Fig. 3A bis 3F: einen Querschnitt durch einen Formgegenstand während unterschiedlicher Verfahrensschritte seiner Herstellung,
- Fig. 4 und 4A: eine Seitenansicht eines Dickenfräsers während des Abfräsens einer Materialschicht,
- Fig. 5: einen Querschnitt durch ein erstes Ausführungsbeispiel eines Formgegenstands nach dem Auftragen sämtlicher Materialschichten,
- Fig. 6: eine schematische Darstellung der aus dem ersten und zweiten Material bestehenden, verfestigten Materialschichten des Formgegenstands, wobei die Schichten transparent dargestellt sind,
- Fig. 7: eine dreidimensionale Ansicht eines Schichtstapels, bestehend aus den Materialschichten des ersten und zweiten Materials,
- Fig. 8: eine dreidimensionale Ansicht des Formgegenstands nach dem Entfernen der Materialschichten des ersten Materials mit Hilfe eines Lösungsmittels,
- Fig. 9: einen Querschnitt durch ein zweites Ausführungsbeispiel eines Formgegenstands nach dem Auftragen sämtlicher Materialschichten,
- Fig. 10: einen Querschnitt durch das zweite Ausführungsbeispiel des Formgegenstands nach dem Entfernen der Materialschichten des ersten Materials,
- Fig. 11: eine Seitenansicht einer Vorrichtung ähnlich Fig. 2, wobei jedoch anstelle der Flexo-Druckvorrichtung eine Rotations-Siebdruckvorrichtung vorgesehen ist,
- Fig. 12: eine Seitenansicht einer Vorrichtung ähnlich Fig. 2, wobei jedoch anstelle der Flexo-Druckvorrichtung eine Kammerrakel-Beschichtungsvorrichtung vorgesehen ist,
- Fig. 13: eine zylindrische Beschichtungs-Walze,
- Fig. 14: eine kegelstumpfförmige Beschichtungs-Walze,
- Fig. 15: eine Seitenansicht einer Vorrichtung ähnlich Fig. 2, wobei jedoch anstelle der Flexo-Druckvorrichtung eine Tintenstrahldruckvorrichtung für höhere Viskositäten vorgesehen ist,
- Fig. 16: eine Seitenansicht einer Vorrichtung ähnlich Fig. 2, wobei jedoch anstelle der Flexo-Druckvorrichtung eine Hotmelt- oder eine Mikrodosierungs-/Beschichtungsvorrichtung vorgesehen ist,
- Fig. 17: einen vergrößerten Ausschnitt von Fig. 16, der eine Düse beim Befüllen einer Kavität mit dem zweiten Material zeigt,
- Fig. 18: eine schematische Darstellung eines Druckkopf-Moduls zum Auftragung des zweiten Materials,
- Fig. 19: eine Kavität, die mit dem zweiten Material befüllt wurde,
- Fig. 20: eine Mikrodosierungs-Einheit mit einer Düse, die eine kreisförmige Austrittsöffnung hat, und
- Fig. 21: eine Mikrodosierungs-Einheit mit einer Düse, die eine rechteckige Austrittsöffnung hat.

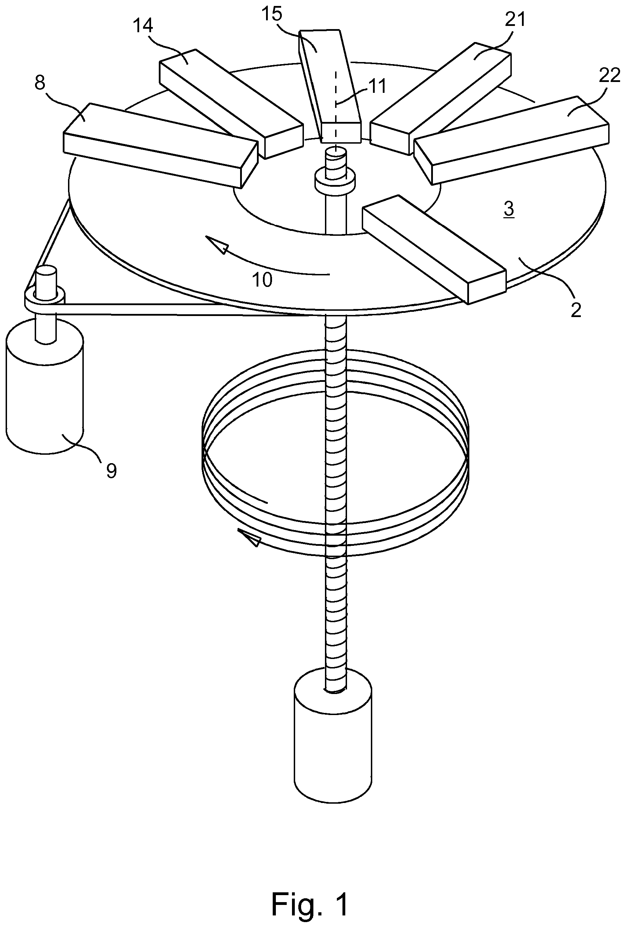

Bei einem Verfahren zum Herstellen einer dreidimensionalen Form und eines dreidimensionalen Formgegenstands 1 mittels schichtweisem Materialauftrag werden Geometriedaten für den Formgegenstand 1 von einer Steuereinheit bereitgestellt, die mit einem Computer kommuniziert, auf dem eine Software abläuft. Außerdem werden ein plattenförmiges Trägerteil 2 mit einer mit einer in einer Horizontalebene angeordneten Basisfläche 3 zur Aufnahme des Formgegenstands 1 bereitgestellt. Wie in Fig. 1 zu sehen ist, weist die Basisfläche 3 im Wesentlichen die Form einer Kreisringscheibe auf. Es sind aber auch andere Ausgestaltungen denkbar, bei denen die Basisfläche 4 insbesondere die Form einer Vollkreisscheibe aufweisen oder rechteckig ausgestaltet sein kann.

Ferner werden bei dem Verfahren ein verfestigbares flüssiges erstes Material 4, ein sich davon unterscheidendes, verfestigbares flüssiges zweites Material 5 und Wasser als Lösungsmittel für das verfestigte erste Material 4 bereitgestellt. Das verfestigte zweite Material 5 ist in dem Lösungsmittel nicht lösbar. Das zweite Material 5 wird derart gewählt, dass es im verfestigtem Zustand eine höhere Festigkeit aufweist als das verfestigte erste Material 4. Daher weist das zweite Material 5 eine höhere Viskosität auf als des erste Material 4. Bei diesem Ausführungsbeispiel ist das erste Material 4 ein Polymer, das einen Photoinitiator enthält und durch Bestrahlung mit ultravioletter Strahlung vernetzbar ist.

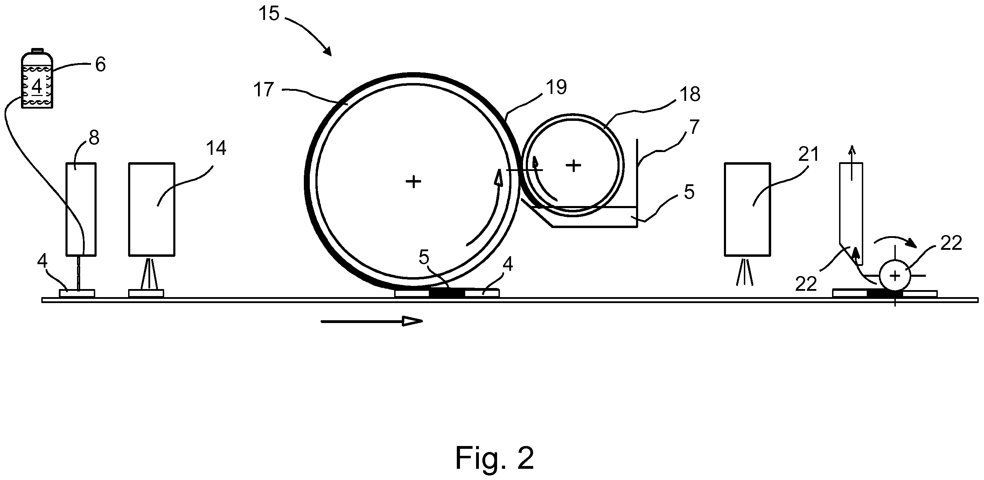

Das flüssige erste Material 4 ist in einem ersten Reservoir 6 und das flüssige zweite Material 5 in einem zweites Reservoir 7 angeordnet. Das erste Reservoir 6 ist über eine Leitung mit einer ersten Abgabeeinrichtung 8 für das erste Material 4 verbunden. Wie in Fig. 2 erkennbar ist, ist das erste Reservoir 5 als im Wesentlichen geschlossener Behälter und das zweite Reservoir 7 als Wanne ausgebildet.

Die erste Abgabeeinrichtung 8 weist einen ersten Inkjet-Druckkopf mit einer Vielzahl von in einer Reihe angeordneten, in der Zeichnung nicht näher dargestellten Düsen auf, die zur Abgabe von Materialportionen des ersten Materials 4 auf die Basisfläche 3 bzw. eine darauf befindliche verfestigte Materialschicht des ersten und/oder zweiten Materials 4, 5 gerichtet sind. Die Düsenreihe ist parallel zur Ebene der Basisfläche 4 angeordnet und erstreckt sich quer zur Umfangsrichtung Basisfläche 3, vorzugsweise im Wesentlichen radial zu deren Zentrum.

Das Trägerteil 2 und die erste Abgabeeinrichtung 8 sind mit Hilfe einer ersten Positioniereinrichtung 9 in und entgegen der Richtung des Pfeils 10 relativ zueinander verdrehbar und parallel zur Rotationsachse 11 verschiebbar. Dabei bewegen sich Punkte, die in der Basisfläche 3 liegen und von der Rotationsachse 11 beabstandet sind, entlang einer wendel- oder schraubenlinienförmigen Bahnkurve.

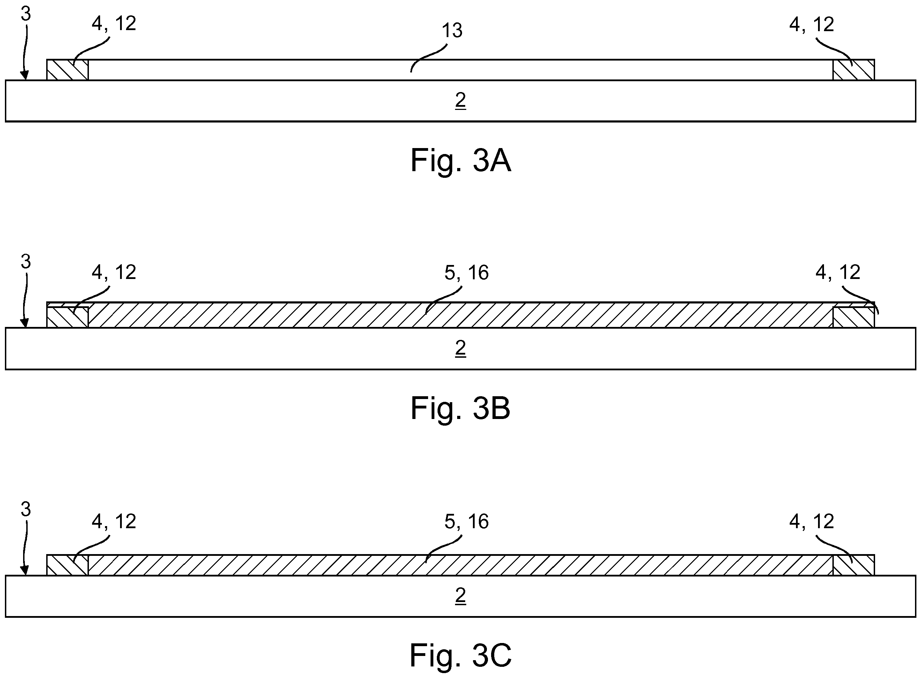

Die erste Abgabeeinrichtung 8 und die erste Positioniereinrichtung 9 sind mit einer in der Zeichnung nicht näher dargestellten Steuereinrichtung verbunden, die einen Datenspeicher zum Ablegen der Geometriedaten des herzustellenden Formgegenstands 1 aufweist. Mittels der Steuereinrichtung sind die Abgabe der Materialportionen des ersten Materials 4 und die erste Positioniereinrichtung 9 in Abhängigkeit von den Geometriedaten derart steuerbar, dass aus dem fließfähigen ersten Material 4 bestehende Negativform-Schichten 12 auf die Basisfläche bzw. eine zuvor darauf aufgebrachte verfestigte Materialschicht des ersten und/oder zweiten Materials 4, 5 aufbringbar sind (Fig. 3A). Dabei haben die Negativform-Schichten 12 jeweils mindestens eine Kavität 13, welche eine Negativform einer herzustellenden Materialschicht des Formgegenstands 1 aufweist. Die Kavitäten 13 erstecken sich jeweils über die gesamte Schichtdicke der betreffenden Negativform-Schicht 12 bis zu der Basisfläche 3 bzw. der unter der Negativform-Schicht 12 befindlichen verfestigten Materialschicht.

In Richtung des Pfeils 10 hinter der ersten Abgabeeinrichtung 8 ist eine erste Verfestigungseinrichtung 14 angeordnet, mittels welcher das auf die Basisfläche 3 oder eine darauf befindliche verfestigte Materialschicht aufgetragene flüssige erste Material 4 verfestigbar ist. Die erste Verfestigungseinrichtung 14 hat zu diesem Zweck eine in der Zeichnung nicht näher dargestellte erste UV-Strahlungsquelle, mittels der ultraviolette Strahlung derart auf die zu verfestigende Materialschicht des ersten Materials abgebbar ist, dass ein in dem ersten Material enthaltener Photovernetzer aktiviert und die in dem ersten Material 4 enthaltenen Polymere vernetzt werden.

In Richtung des Pfeils 10 hinter der ersten Verfestigungseinrichtung 14 ist eine zweite Abgabeeinrichtung 15 angeordnet, mittels der die Kavität(en) 13 der jeweiligen, zuvor verfestigten Negativform-Schicht 12 mit dem zweiten Material 5 befüllt werden, um eine Formgegenstands-Schicht 16 zu bilden (Fig. 3B). Bei dem in Fig. 2 abgebildeten Ausführungsbeispiel ist die zweite Abgabeeinrichtung 15 als Flexo-Druckvorrichtung ausgestaltet.

Diese weist einen als Flexodruckwalze ausgestalteten Transferkörper 17 und eine mit dem zweiten Reservoir 7 in Kontakt stehende Beschichtungseinrichtung 18 auf, mittels der zumindest ein Oberflächenbereich des Transferkörpers 17 mit einer Schicht 19 des zweiten Materials 5 beschichtbar ist. Mit Hilfe einer zweiten Positioniereinrichtung ist der kegelförmige Transferkörper 17 um eine gedachte Rotationsachse derart drehbar, dass die auf der Mantelfläche des Transferkörpers 17 befindliche Schicht 19 des zweiten Materials 5 derart mit dem Boden und der Innenwandung der Kavität(en) 13 in Kontakt gelangt, dass das fließfähige zweite Material 5 in die Kavität(en) eingefüllt wird und dann die Formgegenstands-Schicht 16 bildet. Diese weist die zu der Negativform der Schicht 12 inverse Positivform einer Schicht des herzustellenden Formgegenstands 1 auf.

Danach wird die so erhaltene Formgegenstands-Schicht 16 mit Hilfe einer zweiten Verfestigungseinrichtung 21 verfestigt. Wie in Fig. 1 zu sehen ist, ist die zweite Verfestigungseinrichtung 21 in Richtung des Pfeils 10 hinter der zweiten Abgabeeinrichtung 14 angeordnet. Die zweite Verfestigungseinrichtung 21 enthält eine zweite UV-Strahlungsquelle, mittels der ultraviolette Strahlung auf die Formgegenstands-Schicht 15 abgebbar ist, um das zweite Material durch Vernetzen darin enthaltener Polymere zu verfestigen.

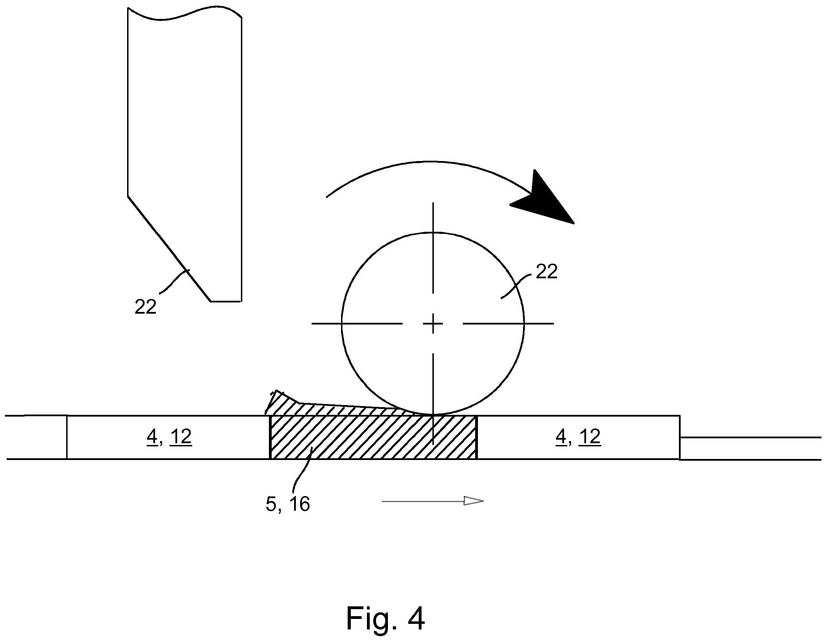

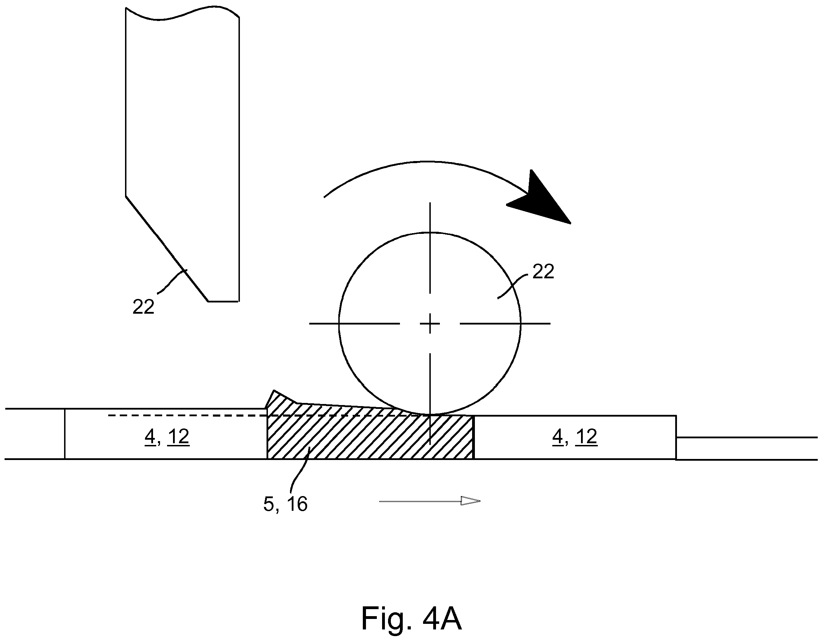

Danach werden in einem weiteren Verfahrensschritt Bereiche der verfestigten Negativform-Schicht 12 und/oder der verfestigten Formgegenstands-Schicht 16 und/oder verfestigtes zweites Material 5, das an der Negativform-Schicht angeordnet ist, mittels eines Dickenfräsers 22 entfernt (Fig. 3C, 4, 4A). Dabei werden Bereiche des verfestigten ersten und/oder zweiten Materials 4, 5, die über eine in einem vorbestimmten Abstand zur Basisfläche parallel zu dieser angeordnete Ebene überstehen, durch spanabhebenden Materialabtrag vollständig entfernt und anschließend mittels eines Saugdüse 23 abgesaugt. Bei Bedarf kann hinter der Saugdüse 23 eine Oberflächenreinigungseinrichtung 20 angeordnet sein.

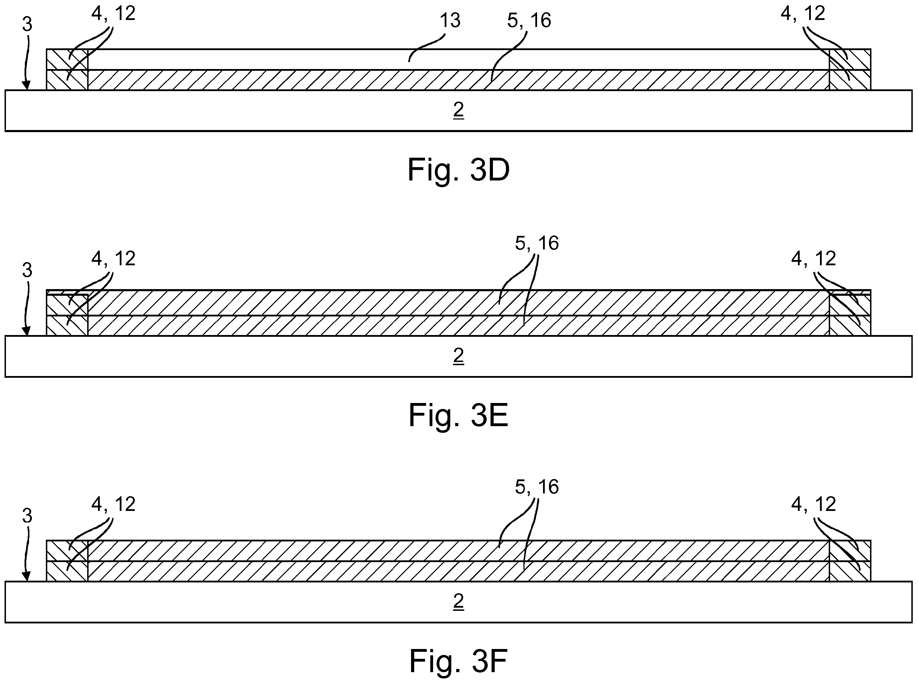

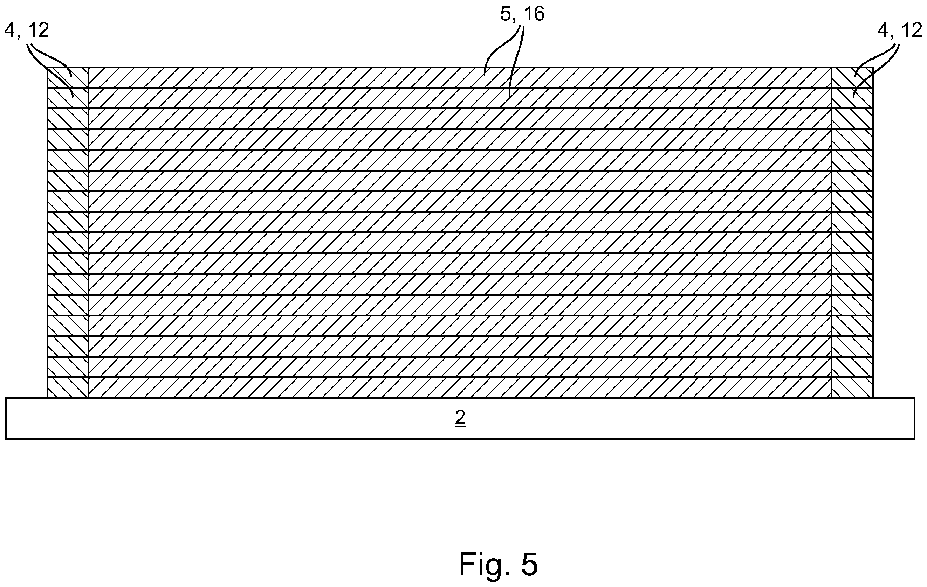

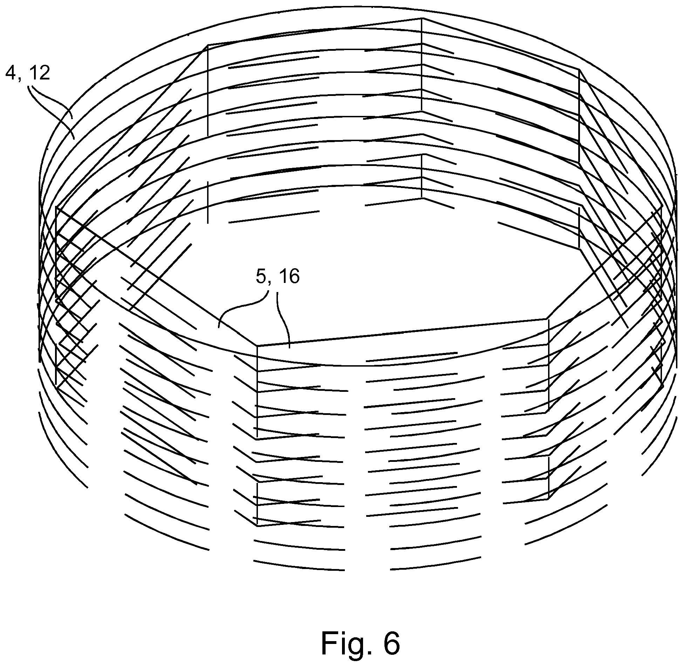

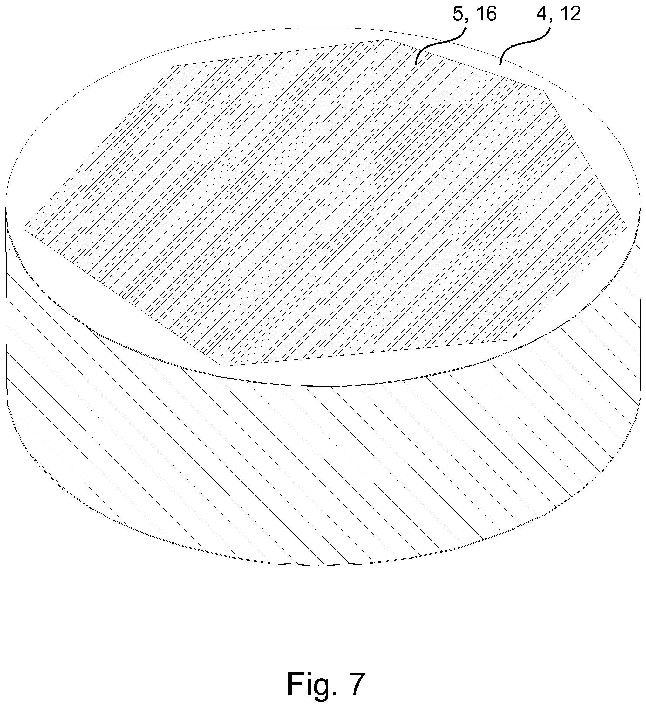

Nun werden in entsprechender Weise auf die Oberfläche der verfestigten Negativform-Schicht 12 und der Formgegenstands-Schicht 16 eine weitere Negativform-Schicht 12 (Fig. 3D) und eine weitere Formgegenstands-Schicht 16 aufgebracht (Fig. 3E, 3F) aufgebracht. Diese Schritte werden solange wiederholt, bis sämtliche Formgegenstands-Schichten 16 des herzustellenden Formgegenstands erzeugt sind (Fig. 5 bis 8).

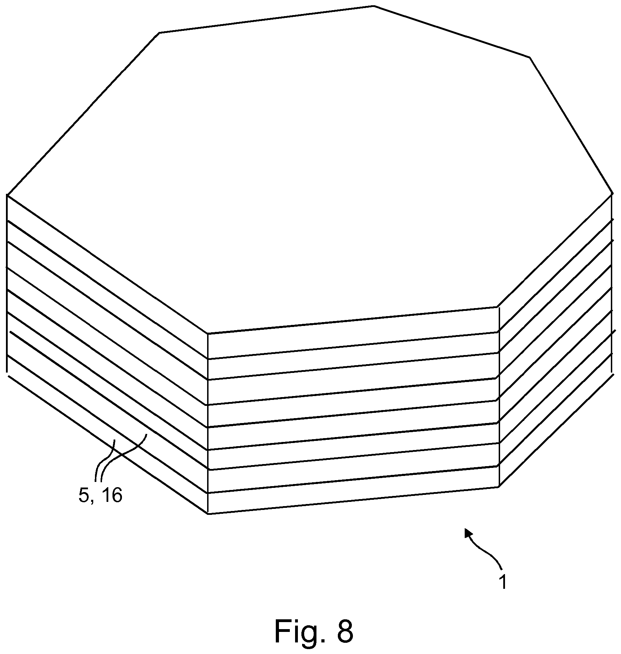

In einem weiteren Verfahrensschritt werden die Negativform-Schichten 12 derart mit dem Lösungsmittel in Kontakt gebracht, dass sich das verfestigte erste Material 4 vollständig in dem Lösungsmittel auflöst. Dies kann beispielsweise dadurch erreicht werden, dass der aus den Negativform-Schichten 12 und den Formgegenstands-Schichten 16 bestehende Schichtstapel für eine vorbestimmte Zeitdauer in das Lösungsmittel eingetaucht wird. Danach wir der fertige Formgegenstand (Fig. 8) aus dem Lösungsmittel entnommen und getrocknet.

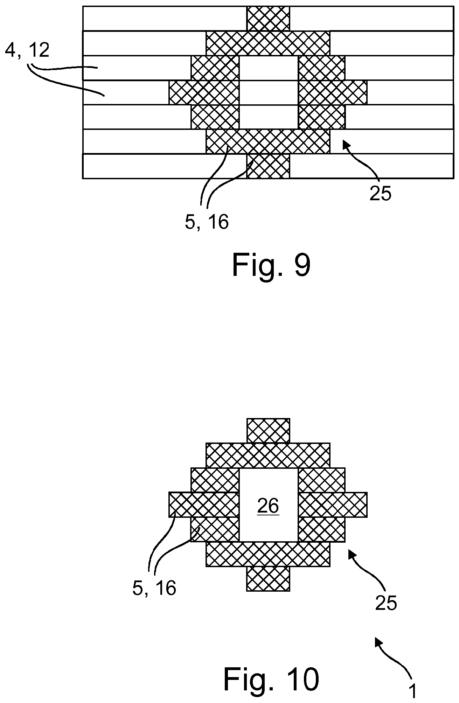

Wie in Fig. 9 und 10 zu sehen ist, lassen sich mit dem erfindungsgemäßen Verfahren auch Formgegenstände mit Überhängen 25 und Hohlräumen 26 herstellen.

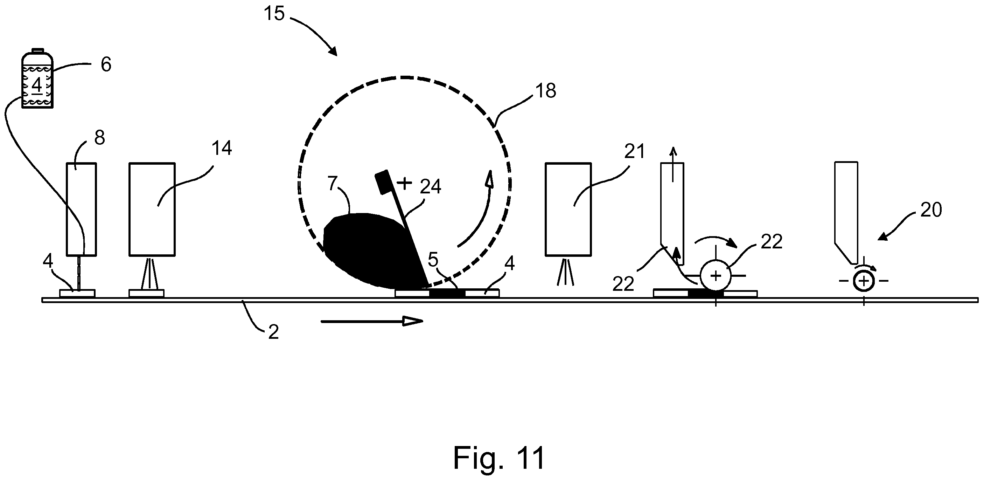

Das zweite Material 5 kann auch im Siebdruckverfahren in die Kavität(en) 13 eingefüllt werden. Wie in Fig. 11 zu sehen ist, ist der Transferkörper 18 dabei als Rotations-Siebdruckwalze ausgestaltet. Diese weist eine perforierte, siebartige Mantelfläche auf. Das zweite Reservoir 6 ist in der Innenhöhlung der Rotations-Siebdruckwalze angeordnet.

Die in der Mantelfläche vorgesehenen Perforationslöcher sind bezüglich ihrer Abmessungen derart auf die Viskosität des zweiten Materials 5 abgestimmt, dass das zweite Material 5 mittels eines an der Innenmantelfläche der Zylinderwand der Rotations-Siebdruckwalze linienförmig anliegenden Rakels 24 durch die Perforationslöcher hindurchdrückbar ist. Außerhalb des Wirkungsbereichs des Rakels 24 tritt das zweite Material 5 nicht durch die Perforationslöcher hindurch. Eine hinter der Abgabestelle platzierte Reinigungs-Vorrichtung entfernt das nicht an der Rotations-Siebdruckwalze abgenommene Material und führt es zur Wiederverwendung in den Kreislauf. Im Übrigen entspricht die in Fig. 11 abgebildete Vorrichtung derjenigen in Fig. 2, so dass die Beschreibung von Fig. 2 für Fig. 11 entsprechend gilt.

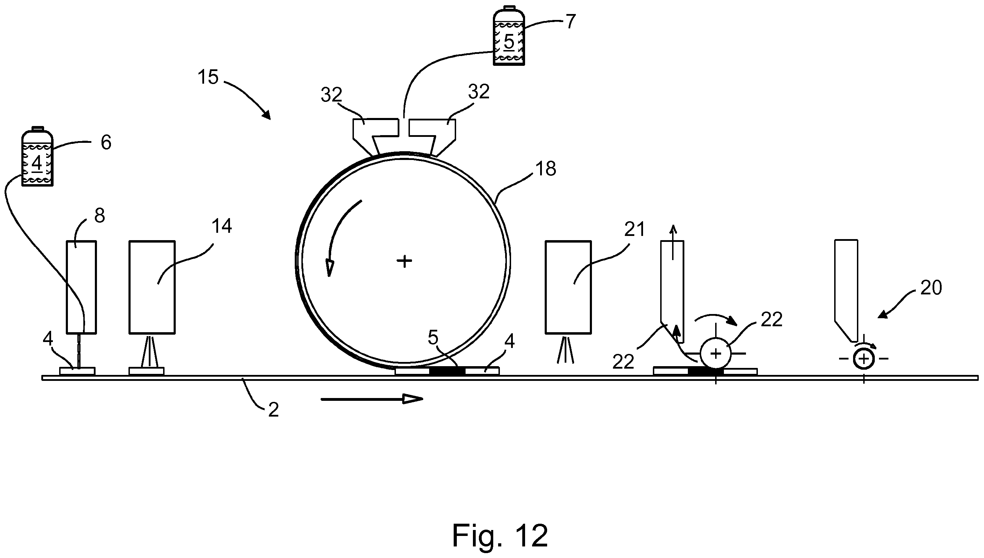

Das zweite Material 5 kann auch im Kammerrakel-Verfahren in die Kavität(en) 13 eingefüllt werden. Wie in Fig. 12 zu sehen ist, ist der Transferkörper 18 dabei als Rasterwalze ausgestaltet, an deren Außenmantelfläche ein Kammerrakel 32 angeordnet ist. Die Rasterwalze weist eine entsprechend gravierte und zur Materialaufnahme präparierte Mantelfläche auf. Im Übrigen entspricht die in Fig. 12 abgebildete Vorrichtung derjenigen in Fig. 2, so dass die Beschreibung von Fig. 2 für Fig. 12 entsprechend gilt.

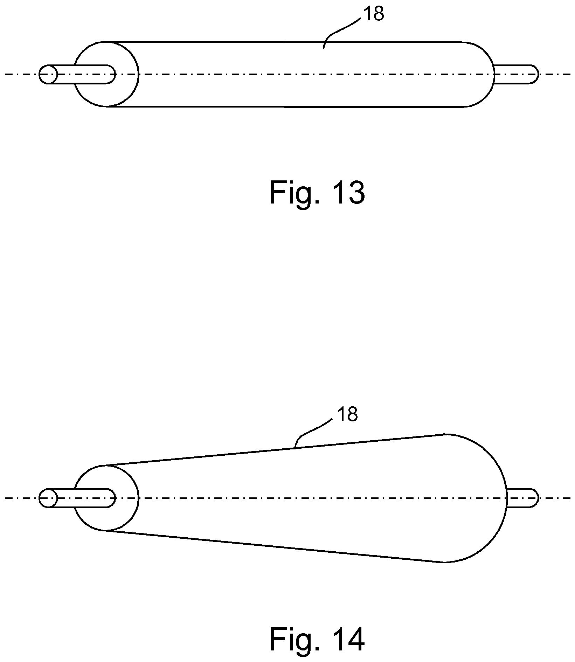

Während beim kartesischem Verfahren die Walze der Beschichtungseinrichtung 18 eine zylindrische Form hat (Fig. 13) weist die Walze beim polaren Verfahren eine konische Form auf (Fig. 14).

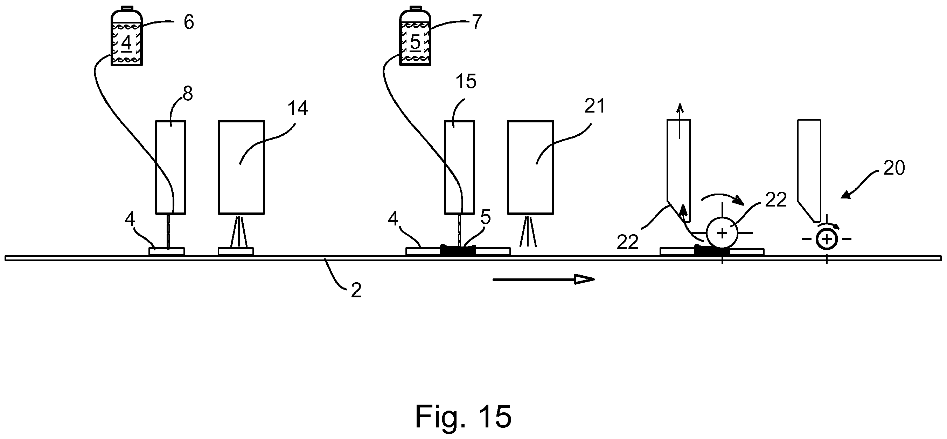

Das zweite Material 5 kann auch im Tintenstrahldruckverfahren in die Kavität(en) 13 eingefüllt werden (Fig. 15). Die zweite Abgabeeinrichtung 15 weist zu diesem Zweck einen zweiten Inkjet-Druckkopf mit einer Vielzahl von in einer Reihe angeordneten Düsen auf, die zur Abgabe von Materialportionen des zweiten Materials 5 auf die Basisfläche 3 bzw. eine darauf befindliche verfestigte Materialschicht des ersten und/oder zweiten Materials 4, 5 gerichtet sind. Die Düsenreihe ist parallel zur Ebene der Basisfläche 4 angeordnet und erstreckt sich quer zur Umfangsrichtung Basisfläche 3, vorzugsweise im Wesentlichen radial zu deren Zentrum. Da das zweite Material 5 eine höhere Viskosität aufweist als das erste Material 4, haben die Düsen des zweiten Inkjet-Druckkopfs einen größeren Querschnitt auf als die des ersten Inkjet-Druckkopfs. Statt mit einem größeren Düsenquerschnitt oder zusätzlich dazu kann bei den Düsen des zweiten Inkjet-Druckkopfs auch mit einem höheren Düsendruck gearbeitet werden als bei den ersten Düsen. Die Positionierung des Trägerteils 2 relativ zu dem Inkjet-Druckkopf erfolgt entsprechend Fig. 1 mit Hilfe einer Positioniereinrichtung. Das Ausstoßen des zweiten Materials 5 wird in Abhängigkeit von der Relativposition zwischen dem Inkjet-Druckkopf und dem Trägerteil 2 und in Abhängigkeit von den für den herzustellenden Formgegenstand 1 bereitgestellten Geometriedaten gesteuert.

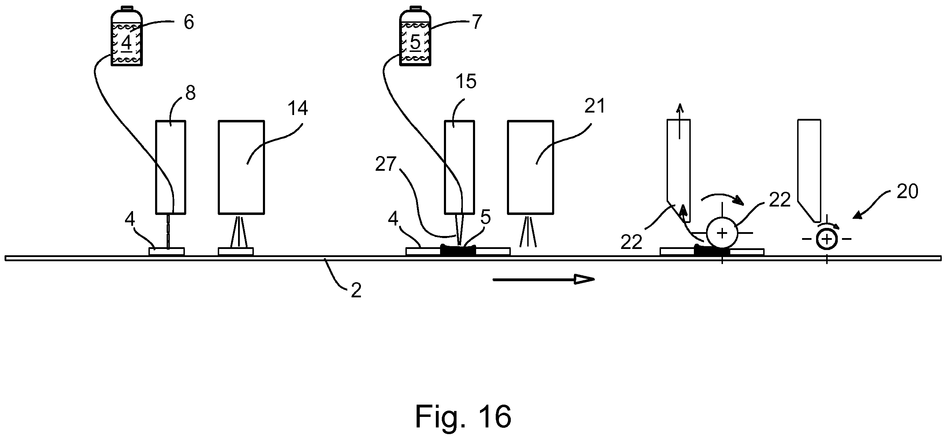

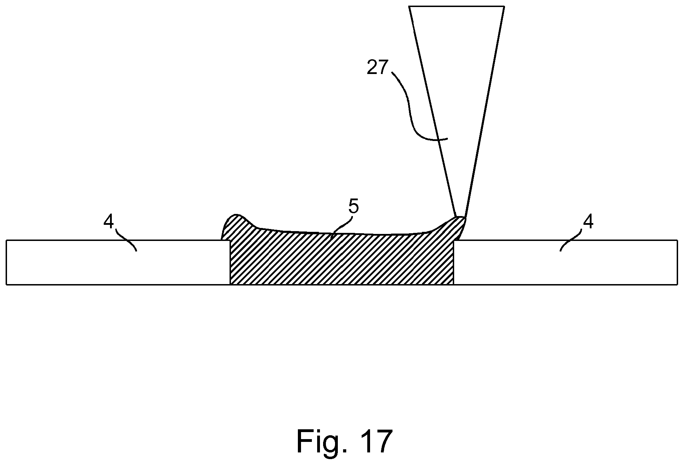

Bei dem in Fig. 16 gezeigten Ausführungsbeispiel wird das zweite Material 5 im Düsen- oder Hotmelt-Verfahren in die Kavität(en) 13 eingefüllt. Bei dem Düsen-Verfahren wird ein hochviskoses zweites Material 5 bei Raumtemperatur oder in gegenüber der Raumtemperatur erwärmtem Zustand mittels Gasdruck durch einen Düsen-Austritt befördert. Beim Hotmelt-Verfahren ist das zweite Material 5 ein thermoplastischer Kunststoff, der bei Raumtemperatur fest ist und durch Erhitzen verflüssigt werden kann. Während des Druckprozesses wird das zweite Material derart erhitzt, dass es flüssig wird, und dann wird es mittels einer Dosierpumpe, Förderschnecke oder Gasdruck durch eine auf die zu befüllende Kavität 13 ausgerichtete Düse 27 (Fig. 17) hindurch auf die Basisfläche 3 bzw. eine darauf befindliche verfestigte Materialschicht des ersten und/oder zweiten Materials 4, 5 abgegeben. Die Positionierung des Trägerteils 2 relativ zur Düse 27 erfolgt entsprechend Fig. 1 mit Hilfe einer Positioniereinrichtung 9. Das Ausstoßen des zweiten Materials 5 aus der Düse 27 wird in Abhängigkeit von der Relativposition zwischen der Düse 27 und dem Trägerteil 2 und in Abhängigkeit von den für den herzustellenden Formgegenstand 1 bereitgestellten Geometriedaten gesteuert. Nachdem das zweite Material in die Kavität(en) 13 eingefüllt wurde, wird es durch Abkühlen verfestigt.

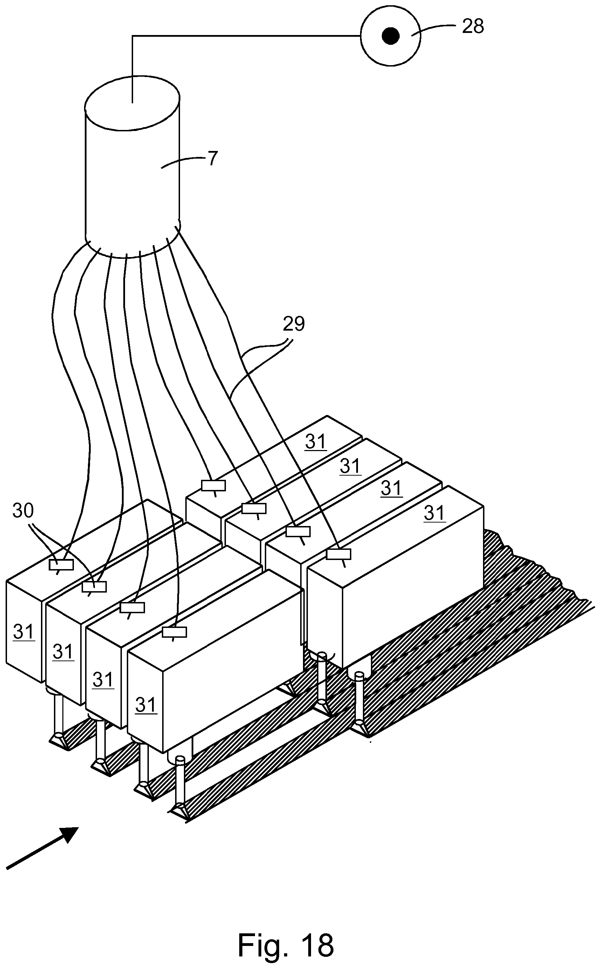

Ferner besteht die Möglichkeit, das zweite Material 5 durch ein Mikrodosierungsverfahren in die Kavität(en) 13 einzufüllen. Wie in Fig. 18 zu sehen ist, ist das zweite Reservoir 7 dabei mit einer Gasdruckquelle 28, die z.B. eine Luftdruckquelle sein kann, verbunden, um das zweite Material 5 unter Druck zu setzen. Das Reservoir 7 ist über Leitungen 29, in denen jeweils ein in eine Offen- und eine Schließstellung verstellbares Ventil 30 angeordnet ist, mit einer Düse 27 zur Materialabgabe verbunden. Die Austrittsöffnung der Düse 27 wird mit ihrer Austrittsöffnung in geringem Abstand zur Basisfläche 3 angeordnet und dann derart entlang der Basisfläche 3 relativ zu dem Trägerteil 2 positioniert. Die einzelnen Ventile 30 werden jeweils derart in Abhängigkeit von den für den herzustellenden Formgegenstand 1 bereitgestellten Geometriedaten und in Abhängigkeit von der Relativposition zwischen der Düse 27 und dem Trägerteil 2 angesteuert, dass der Materialfluss des zweiten Materials 5 freigegeben wird, wenn die Austrittsöffnung der Düse 27 an der Kavität 13 positioniert ist. Der Materialfluss wird gesperrt, wenn die Austrittsöffnung der Düse 27 nicht an der Kavität 13 positioniert ist.

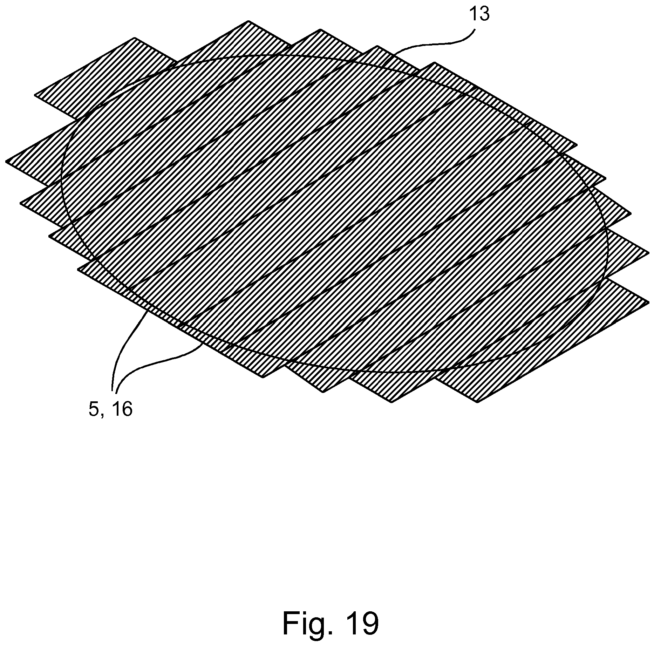

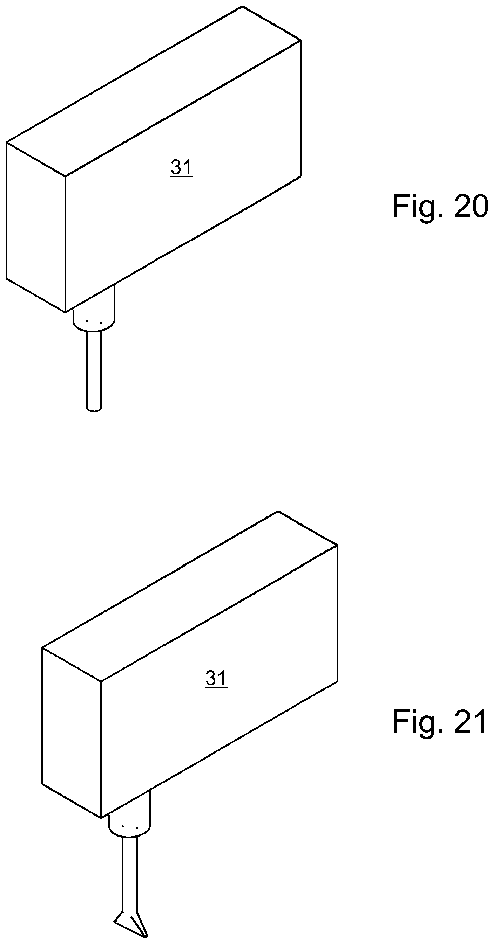

Wie in Fig. 18 zu sehen ist, können mehrere Mikrodosierungseinheiten 31 vorgesehen sein, deren Ventil 30 jeweils mit seinem Einlass über eine Leitung 29 mit dem zweiten Reservoir 7 verbunden ist. Jede Mikrodosierungseinheit 31 hat jeweils eine Düse 27, die mit dem Auslass des betreffenden Ventils 30 verbunden ist. Die Düsen 27 sind matrixförmig in mehreren Reihen und/oder mehreren Spalten angeordnet. Die Ventile 30 werden derart gesteuert, dass die Kavität 13 flächig mit dem zweiten Material 5 belegt wird (Fig. 19). Die Düse 27 kann eine runde (Fig. 20) oder eine eckige, vorzugsweise rechteckige (Fig. 21) Austrittsöffnung haben.

## Patentansprüche

1. Verfahren zum Herstellen eines dreidimensionalen Formgegenstands (1) mittels schichtweisem Materialauftrag, wobei Geometriedaten für den Formgegenstand (1), ein Trägerteil (2) mit einer Basisfläche (3) zur Aufnahme des dreidimensionalen Formgegenstands (1), ein verfestigbares flüssiges oder fließfähiges erstes Material (4), ein verfestigbares, flüssiges, fließfähiges, pastöses oder pulverförmiges zweites Material (5) und ein Lösungsmittel bereitgestellt werden, wobei das zweite Material (5) im verfestigtem Zustand eine höhere Festigkeit aufweist als das verfestigte erste Material (4), wobei das verfestigte erste Material (4) in dem Lösungsmittel lösbar ist,
a) wobei zur Bildung einer aus dem ersten Material (4) bestehenden Negativform-Schicht (12) Materialportionen des fließfähigen ersten Materials (4) derart entsprechend den Geometriedaten auf die Basisfläche (3) und/oder eine darauf befindliche verfestigte Materialschicht des dreidimensionalen Formgegenstands (1) aufgebracht werden, dass die Negativform-Schicht (12) an ihrer der Basisfläche (3) abgewandten Oberfläche mindestens eine Kavität (13) hat, welche eine Negativform einer herzustellenden Materialschicht des Formgegenstands (1) aufweist,
b) wobei die Negativform-Schicht (12) verfestigt wird,
c) wobei zur Bildung einer Formgegenstands-Schicht (16) die Kavität (13) derart mit dem zweiten Material (5) befüllt wird, dass die Negativform durch Abformen des verfestigten ersten Materials (4) als Positivform auf die Formgegenstands-Schicht (16) übertragen wird,
d) wobei das in die Kavität (13) eingefüllte zweite Material (5) verfestigt wird,
e) wobei über eine in einem vorbestimmten Abstand zur Basisfläche (3) angeordnete Ebene überstehende Bereiche der verfestigten Negativform-Schicht (12) und/oder der verfestigten Formgegenstands-Schicht (16) durch spanabhebenden Materialabtrag entfernt werden,
f) wobei die Schritte a) bis e) mindestens einmal wiederholt werden,
g) wobei die Negativform-Schichten (12) derart mit dem Lösungsmittel in Kontakt gebracht werden, dass sich das verfestigte erste Material (4) in dem Lösungsmittel löst.

2. Verfahren nach Anspruch 1, **dadurch gekennzeichnet, dass** die Materialportionen des ersten Materials (4) vorzugsweise mittels eines Tintenstrahl-Druckverfahrens oder mittels Elektrofotografie auf die Basisfläche und/oder die darauf befindliche verfestigte Negativform-Schicht (12) und/oder eine verfestigte Formgegenstands-Schicht (16) aufgebracht werden, und das erste Material (4) ein durch Einwirkung von Energie verfestigbares Material ist, das zum Verfestigen der Negativform-Schicht (12) mit der Energie beaufschlagt wird.

3. Verfahren nach Anspruch 1 oder 2, **dadurch gekennzeichnet, dass** die Viskosität des zweiten Materials (5) im unverfestigten Zustand höher, gegebenenfalls mindestens 10 mal so hoch, insbesondere mindestens 200 mal so hoch und bevorzugt mindestens 2000 mal so hoch ist wie die Viskosität des ersten Materials (4) im unverfestigten Zustand und/oder dass das fließfähige erste und das fließfähige, pastöse oder pulverförmige zweite Material einen Feststoffanteil aufweisen und dass der Feststoffanteil des zweiten Materials (5) im unverfestigten Zustand dieses Materials (5) höher, gegebenenfalls mindestens 10 mal so hoch, insbesondere mindestens 200 mal so hoch und bevorzugt mindestens 2000 mal so hoch ist wie der Feststoffanteil des ersten Materials (4) in dessen unverfestigtem Zustand.

4. Verfahren nach einem der Ansprüche 1 bis 3, **dadurch gekennzeichnet, dass** das erste Material (4) eine zum Verjetten geeignete Arbeits-Viskosität hat, die geringer als 1000 mPa·s, insbesondere geringer als 100 mPa·s, gegebenenfalls geringer als 30 mPa·s und bevorzugt geringer als 10 mPa·s hat und in Form von Flüssigkeitströpfchen mit einer Auflösung von mindestens 360 dpi (254 dpi = 100 dpc), insbesondere mindestens 720 dpi und bevorzugt mindestens 1440 dpi auf die Basisfläche und/oder die darauf befindliche verfestigte Materialschicht des dreidimensionalen Formgegenstands (1) aufgebracht wird.

5. Verfahren nach einem der Ansprüche 1 bis 4, **dadurch gekennzeichnet, dass** das zweite Material (5) mittels eines selektiven Beschichtungsverfahrens derart in Abhängigkeit von den Geometriedaten auf die Negativform-Schicht (12) aufgetragen wird, dass zumindest eine Materialportion des fließfähigen, pastösen oder pulverförmigen zweiten Materials in die mindestens eine Kavität (13) abgegeben wird und vorzugsweise mindestens eine außerhalb der Kavität befindliche Stelle der Negativform-Schicht nicht mit dem zweiten Material (4) in Kontakt gebracht wird.

6. Verfahren nach einem der Ansprüche 1 bis 5, **dadurch gekennzeichnet, dass** das zweite Material (5) ein Komposit ist, welches ein Fluid und wenigstens ein Additiv umfasst, dass das Fluid bei Raumtemperatur eine Viskosität von mindestens 50 mPa·s und vorzugsweise von mindestens 1000 mPa·s aufweist, und dass das Additiv Feststoffpartikel aufweist, die in dem Fluid angeordnet sind.

7. Verfahren nach Anspruch 5 oder 6, **dadurch gekennzeichnet, dass** das zweite Material (5) eine höhere Viskosität und/oder einen höheren Feststoffanteil aufweist als das erste Material (1), dass sowohl das erste als auch zweite Material (4, 5) mittels eines Tintenstrahl-Druckverfahrens auf die Basisfläche (3) und/oder eine darauf befindliche verfestigte Negativform-Schicht (12) und/oder Formgegenstands-Schicht (16) aufgebracht werden, dass bei dem Tintenstrahl-Druckverfahren das erste Material (4) aus mindestens einer ersten Düse und das zweite Material (5) aus wenigstens einer zweiten Düse ausgestoßen werden, und dass die Austrittsöffnung der zweiten Düse einen größeren Querschnitt aufweist und/oder mit einem höheren Arbeitsdruck beaufschlagt wird als die Austrittsöffnung der ersten Düse, insbesondere dass der Durchmesser der Austrittsöffnung der zweiten Düse größer ist als derjenige der Austrittsöffnung der ersten Düse.

8. Verfahren nach einem der Ansprüche 2 bis 7, **dadurch gekennzeichnet, dass** das zweite Material (5) mit einem Gasdruck beaufschlagt wird und das auf diese Weise unter Druck gesetzte zweite Material (5) über wenigstens ein Ventil (30) zu mindestens einer Düse (27) geleitet wird, dass die Austrittsöffnung der Düse entlang der Basisfläche (3) relativ zu dem Trägerteil (2) positioniert und das Ventil (30) derart in Abhängigkeit von den für den herzustellenden Formgegenstand (1) bereitgestellten Geometriedaten und in Abhängigkeit von der Relativposition zwischen der Düse (27) und dem Trägerteil (2) angesteuert wird, dass der Materialfluss freigegeben wird, wenn die Austrittsöffnung an der Kavität (13) positioniert ist, und dass der Materialfluss gesperrt wird, wenn die Austrittsöffnung nicht an der Kavität (13) positioniert ist.

9. Verfahren nach Anspruch 7 oder 8, **dadurch gekennzeichnet, dass** die Austrittsöffnung einer Düse (27) entlang einer kontinuierlichen, innerhalb der Kavität (13) verlaufenden Linie relativ zum Trägerteil (2) bewegt und das flüssige, fließfähige oder pastöse zweite Material (5) kontinuierlich entlang dieser Linie von der Austrittsöffnung in die Kavität (13) abgegeben wird.

10. Verfahren nach Anspruch 5 oder 6, **dadurch gekennzeichnet, dass** eine Trägerfolie bereitgestellt wird, auf der das zweite Material (5) angeordnet ist, dass das zweite Material (5) eine höhere Viskosität aufweist als das erste Material und/oder mit einem höheren Feststoffanteil enthält ist als das erste Material (5), dass die Trägerfolie zum Befüllen der Kavität (13) mit dem zweiten Material (5) derart an der Kavität (13) positioniert wird, dass das auf der Trägerfolie befindliche zweite Material (5) der Kavität (13) zugewandt ist, dass ein Energiestrahl, für den die Trägerfolie durchlässig ist, derart auf die Trägerfolie gerichtet wird, dass das zweite Material auf der der Kavität (13) zugewandten Seite der Trägerfolie durch Erhitzen verflüssigt und in die Kavität (13) abgegeben wird.

11. Verfahren nach einem der Ansprüche 1 bis 6, **dadurch gekennzeichnet, dass** das zweite Material (5) mittels eines Flexodruck-, Tiefdruck-, Offsetdruck-, Siebdruck-, Lasertransfer-, Mikrodosierungsverfahrens und/oder mittels eines Rakels (24) oder Kammerrakels in die Kavität (13) eingefüllt wird.

12. Verfahren nach einem der Ansprüche 1 bis 11, **dadurch gekennzeichnet, dass** das zweite Material (5) ein Thermoplast ist, welches durch Erhitzen verflüssigt, dann in die Kavität (13) eingefüllt und danach durch Abkühlen verfestigt wird.

13. Verfahren nach einem der Ansprüche 1 bis 12, **dadurch gekennzeichnet, dass** die oberste verfestigte Negativform-Schicht (12) und/oder die oberste verfestigte Formgegenstands-Schicht (16) von den bei dem spanabhebenden Materialabtrag auftretenden Spänen gereinigt wird.

14. Verfahren nach einem der Ansprüche 1 bis 13, **dadurch gekennzeichnet, dass** das die Basisfläche (3) aufweisende Trägerteil (2) während des Materialauftrags und gegebenenfalls während des Verfestigens der Materialien (4, 5) um eine Rotationsachse (11) gedreht und vorzugsweise entlang der Rotationsachse (11) verschoben wird.

## Claims

1. A process for preparing a three-dimensional molded article (1) by means of a layerwise application of material, wherein geometric data for said molded article (1), a support part (2) having a base surface (3) for receiving the three-dimensional molded article (1), a solidifiable liquid or free-flowing first material (4), a solidifiable liquid, free-flowing, pasty or powdery second material (5) and a solvent are provided, wherein said second material (5) in a solidified state has a higher strength than the solidified first material (4), wherein said solidified first material (4) is soluble in said solvent,
a) wherein, for forming a negative form layer (12), material portions of said flowable first material (4) are applied to the base surface (3), and/or a solidified layer of material covering it, of said three-dimensional molded article (1) in accordance with the geometric data in such a manner that said negative form layer (12) has at least one cavity (13) at its surface facing away from said base surface (3), which cavity has a negative form of a layer of material to be prepared of said molded article (1),
b) wherein said negative form layer (12) is solidified,
c) wherein, for forming a layer of the molded article (16), said cavity (13) is filled with the second material (5) in such a manner that the negative form is transferred as a positive form to the layer of the molded article (16),
d) wherein the second material (5) filled into the cavity (13) is solidified,
e) wherein regions of the solidified negative form layer (12) and/or of the solidified molded article layer (16) that project over a plane provided at a predetermined distance to the base surface (3) are removed by material ablation by machining,
f) wherein steps a) to e) are repeated at least once so as to perform step e) after the application of each individual layer of the first material (4),
g) wherein said negative form layers (12) are contacted with the solvent in such a way that said solidified first material (4) dissolves in the solvent:

2. The process according to claim 1, **characterized in that** the material portions of the first material (4) are preferably applied to the base surface and/or the solidified negative form layer (12) covering it and/or a solidified molded article layer (16) by an ink-jet printing method or by electrophotography, and said first material (4) is a material that can be solidified by exposure to energy, and is exposed to such energy for solidifying the negative form layer (12).

3. The process according to claim 1 or 2, **characterized in that** the viscosity of the second material (5) in the non-solidified state is higher, optionally at least 10 times as high, especially at least 200 times as high, and preferably at least 2000 times as high, as the viscosity of the first material (4) in the non-solidified state, and/or that said flowable first and said flowable, pasty or powdery second material have a solids content, and that the solids content of the second material (5) in the non-solidified state of this material (5) is higher, optionally at least 10 times as high, especially at least 200 times as high, and preferably at least 2000 times as high, as the solids content of the first material (4) in its non-solidified state.

4. The process according to any of claims 1 to 3, **characterized in that** said first material (4) has a working viscosity suitable for jetting, which is lower than 1000 mPa·s, especially lower than 100 mPa·s, optionally lower than 30 mPa·s and preferably lower than 10 mPa·s, and is applied to said base surface and/or the solidified layer of material covering it, of said three-dimensional molded article (1) in the form of liquid droplets with a resolution of at least 360 dpi (254 dpi = 100 dpc), especially at least 720 dpi, and preferably at least 1440 dpi.

5. The process according to any of claims 1 to 4, **characterized in that** said second material (5) is applied to said negative form layer (12) as a function of the geometric data using a selective coating method in such a way that at least one material portion of said flowable, pasty or powdery second material is delivered into said at least one cavity (13), and preferably at least one site of the negative form layer that is outside the cavity is not contacted with said second material (4).

6. The process according to any of claims 1 to 5, **characterized in that** said second material (5) is a composite comprising a fluid and at least one additive, that said fluid has a viscosity at room temperature of at least 50 mPa·s and preferably at least 1000 mPa·s, and that said additive has solids particles provided in the fluid.

7. The process according to claim 5 or 6, **characterized in that** said second material (5) has a higher viscosity and/or a higher solids content as compared to the first material (1), that both the first and the second material (4, 5) are applied by an ink-jet printing method to the base surface (3) and/or a solidified negative form layer (12) and/or molded article layer (16) covering it, that in said ink-jet printing method, the first material (4) is ejected from at least one first nozzle, and the second material (5) is ejected from at least one second nozzle, and that the outlet opening of the second nozzle has a greater cross-sectional area and/or is exposed to a higher working pressure as compared to the outlet opening of the first nozzle, especially that the diameter of the outlet opening of the second nozzle is larger than that of the outlet opening of t he first nozzle.

8. The process according to any of claims 2 to 7, **characterized in that** the second material (5) is exposed to a gas pressure, and the thus pressurized second material (5) is passed through at least one valve (30) to at least one nozzle (27), that the outlet opening of the nozzle is provided along the base surface (3) relative to the support part (2), and the valve (30) is actuated as a function of the geometric data provided for the molded article (1) to be prepared, and as a function of the relative positions between the nozzle (27) and said support part (2) in such a manner that the material flow is released when the outlet opening is placed at the cavity (13), and that the material flow is blocked when the outlet opening is not placed at the cavity (13).

9. The process according to claim 7 or 8, **characterized in that** the outlet opening of a nozzle (27) is moved relative to the support part (2) along a continuous line running within the cavity (13), and said liquid, flowable or pasty second material (5) is delivered continuously along this line from the outlet opening into the cavity (13).

10. The process according to claim 5 or 6, **characterized in that** a support sheet is provided on which said second material (5) is arranged, that the second material (5) has a higher viscosity than the first material, and/or contains a higher solids content than the first material (5), that for filling the cavity (13) with the second material (5), the support sheet is placed at the cavity (13) in such a way that the second material (5) provided on the support sheet is facing the cavity (13), that an energy beam for which the support sheet is transparent is directed onto the support sheet in such a way that the second material is liquefied by heating on the side of the support sheet facing the cavity (13), and delivered into the cavity (13).

11. The process according to any of claims 1 to 6, **characterized in that** said second material (5) is filled into the cavity (13) by a flexographic printing, gravure printing, offset printing, screen printing, laser transfer, microdosing method, and/or by means of a doctor blade (24) or chamber blade.

12. The process according to any of claims 1 to 11, **characterized in that** the second material (5) is a thermoplast that is liquefied by heating, then filled into the cavity (13), and thereafter solidified by cooling.

13. The process according to any of claims 1 to 12, **characterized in that** the uppermost solidified negative form layer (12) and/or the uppermost solidified negative molded article layer (16) is cleaned from the chips formed during said machining material ablation.

14. The process according to any of claims 1 to 13, **characterized in that** said support part (2) having the base surface (3) is rotated around a rotation axis (11), and preferably displaced along the rotation axis (11), during the application of material and optionally during the solidification of the materials (4, 5).

## Revendications

1. Procédé pour préparer une pièce moulue tridimensionnelle (1) par application de matériau couche par couche, dans lequel des données géométriques pour la pièce moulue (1), un élément de support (2) ayant une surface de base (3) pour recevoir ladite pièce moulue tridimensionnelle (1), un premier matériau liquide ou fluide solidifiable (4), un deuxième matériau liquide, fluide, pâteux ou poudreux solidifiable (5), et un solvant sont procurés, dans lequel le deuxième matériau (5) dans l'état solidifié présente une solidité supérieure à celle du premier matériau (4) solidifié, dans lequel ledit premier matériau (4) solidifié est soluble dans ledit solvant,
a) dans lequel, pour former une couche de forme négative (12), des portions du premier matériau fluide (4) sont appliqués à la surface de base (3) et/ou, au-dessus, une couche de matériau solidifiée de ladite pièce moulue tridimensionnelle (1) selon les données géométriques, de manière que ladite couche de forme négative (12) présente au moins une cavité (13) dans sa surface à l'opposé de la surface de base (3), qui présente une forme négative d'une couche de matériau de ladite pièce moulue (1) à préparer,
b) dans lequel ladite couche de forme négative (12) est solidifiée,
c) dans lequel, pour former une couche de la pièce moulée (16), la cavité (13) est remplie avec le deuxième matériau de manière que la forme négative soit transférée comme forme positive à la couche de la pièce moulée (16),
d) dans lequel ledit deuxième matériau (5) rempli dans la cavité (13) est solidifié,
e) dans lequel des zones de ladite couche de forme négative (12) solidifiée et/ou de ladite couche de la pièce moulée (16) solidifiée saillant sur un plan situé à une distance prédéterminée de la surface de base (3) sont éliminées par enlèvement de matériau par usinage,
f) dans lequel les étapes a) à e) sont répétées au moins une fois de manière que l'étape e) est respectivement effectuée après l'application de chaque couche de matériau individuelle dudit premier matériau,
g) dans lequel les couches de forme négative (12) sont mises en contact avec le solvant de manière que ledit premier matériau (4) solidifié soit dissout dans ledit solvant.

2. Procédé selon la revendication 1, **caractérisé en ce que** les portions de matériau du premier matériau (4) sont appliquées à la surface de base et/ou au-dessus, à la couche de forme négative (12) solidifiée et/ou une couche de pièce moulue (16) solidifiée de préférence au moyen d'un procédé d'impression à jet d'encre ou au moyen d'électrophotographie, et le premier matériau (4) est un matériau solidifiable par l'action d'énergie, qui est exposé à de l'énergie pour solidifier la couche de forme négative (12).

3. Procédé selon la revendication 1 ou 2, **caractérisé en ce que** la viscosité du deuxième matériau (5) en état non solidifié est supérieure à, éventuellement au moins 10 fois plus élevée, notamment au moins 200 fois plus élevée, et de préférence au moins 2000 fois plus élevée que la viscosité du premier matériau (4) en état non solidifié, et/ou que ledit premier matériau fluide et ledit deuxième matériau fluide, pâteux ou poudreux possèdent une fraction solide, et que la fraction solide du deuxième matériau (5) en état non solidifié dudit matériau (5) est supérieure à, éventuellement au moins 10 fois plus élevée, notamment au moins 200 fois plus élevée, et de préférence au moins 2000 fois plus élevée que la fraction solide du premier matériau (4) dans son état non solidifié.

4. Procédé selon l'une quelconque des revendications 1 à 3, **caractérisé en ce que** ledit premier matériau présente une viscosité de fonctionnement adaptée pour produire des jets, qui est inférieure à 1000 mPa·s, notamment inférieure à 100 mPa·s, éventuellement inférieure à 30 mPa·s, et de préférence inférieure à 10 mPa·s, et est appliqué à la surface de base et/ou, au-dessus, la couche de matériau solidifiée de ladite pièce moulue tridimensionnelle (1) sous la forme de gouttelettes de liquide avec une résolution d'au moins 360 dpi (254 dpi = 100 dpc), notamment d'au moins 720 dpi, et de préférence d'au moins 1440 dpi.

5. Procédé selon l'une quelconque des revendications 1 à 4, **caractérisé en ce que** le deuxième matériau (5) est appliqué au moyen d'un procédé de revêtement sélectif à la couche de forme négative (12) selon les données géométriques de manière qu'au moins une portion de matériau dudit deuxième matériau fluide, pâteux ou poudreux soit distribuée dans ladite au moins une cavité (13), et de préférence au moins une position extérieure à la cavité de ladite couche de forme négative n'est pas mise en contact avec ledit deuxième matériau (4).

6. Procédé selon l'une quelconque des revendications 1 à 5, **caractérisé en ce que** ledit deuxième matériau (5) est un composite comprenant un fluide et au moins un additif, que ledit fluide présente une viscosité à la température ambiante d'au moins 50 mPa·s et de préférence d'au moins 1000 mPa·s, et que ledit additif contient des particules solides qui sont situées dans le fluide.

7. Procédé selon la revendication 5 ou 6, **caractérisé en ce que** ledit deuxième matériau (5) présente une viscosité supérieure et/ou une fraction solide supérieure à celles dudit premier matériau (1), que les deux, ledit premier et ledit deuxième matériau (4, 5), sont appliqués à la surface de base et/ou au-dessus, à la couche de forme négative (12) et/ou la couche de pièce moulue (16) solidifiées au moyen d'un procédé d'impression à jet d'encre, que, dans ledit procédé d'impression à jet d'encre, ledit premier matériau (4) est éjecté à partir d'au moins une première buse, et ledit deuxième matériau (5) est éjecté à partir d'au moins une deuxième buse, et qu'une ouverture de sortie de la deuxième buse présente une section transversale supérieure à, et/ou est exposée à une pression de fonctionnement plus élevée que, l'ouverture de sortie de la première buse, notamment que le diamètre de l'ouverture de sortie de la deuxième buse est supérieur à celui de l'ouverture de sortie de la première buse.

8. Procédé selon l'une quelconque des revendications 2 à 7, **caractérisé en ce que** le deuxième matériau (5) est exposé à une pression de gaz, et le deuxième matériau (5) tellement pressurisé est passé à travers au moins une soupape (30) vers au moins une buse (27), que l'ouverture de sortie de la buse est située le long de la surface de base (3) relativement audit élément de support (2), et la soupape (30) est pilotée selon les données géométriques procurées pour la pièce moulue à préparer et en fonction de la position relative entre la buse (27) et ledit élément de support (2) de manière que l'écoulement du matériau soit libéré quand l'ouverture de sortie est située à la cavité (13), et que l'écoulement du matériau soit bloqué quand l'ouverture de sortie n'est pas située à la cavité (13).

9. Procédé selon la revendication 7 ou 8, **caractérisé en ce que** l'ouverture de sortie d'une buse (27) est déplacée relativement à l'élément de support (2) le long d'une ligne continue s'étendant à l'intérieur de la cavité (13), et ledit deuxième matériau liquide, fluide ou pâteux (5) est distribué en continu le long de cette ligne à partir de l'ouverture de sortie dans la cavité (13).

10. Procédé selon la revendication 5 ou 6, **caractérisé en ce qu'**une feuille de support est procurée sur laquelle le deuxième matériau (5) est situé, ledit deuxième matériau (5) présente une viscosité supérieure à celle dudit premier matériau et/ou une fraction solide supérieure à celle dudit premier matériau (5), que pour remplir ls cavité (13) avec le deuxième matériau (5), la feuille de support est placée à la cavité de manière que le deuxième matériau (5) présent sur la feuille de support soit tourné vers la cavité (13), qu'un faisceau d'énergie pour lequel la feuille de support est transparente est dirigé sur la feuille de support de telle manière que le deuxième matériau se soit liquéfié sur le côté de la feuille de support tourné vers la cavité (13) par chauffage, et soit distribué dans la cavité (13).

11. Procédé selon l'une quelconque des revendications 1 à 6, **caractérisé en ce que** le deuxième matériau (5) est rempli dans la cavité (13) au moyen d'une méthode de flexographie, d'impression en creux, d'impression offset, de sérigraphie, de transfert au laser, de microdosage, et/ou au moyen d'une raclette (24) ou d'une racle à chambres.

12. Procédé selon l'une quelconque des revendications 1 à 11, **caractérisé en ce que** le deuxième matériau (5) est une matière thermoplastique qui est liquéfié par chauffage, puis rempli dans la cavité (13), et ensuite solidifié par refroidissement.

13. Procédé selon l'une quelconque des revendications 1 à 12, **caractérisé en ce que** la couche de forme négative (12) solidifiée supérieure et/ou couche de pièce moulue (16) solidifiée supérieure est nettoyée des copeaux formés pendant l'ablation de matériau par usinage.

14. Procédé selon l'une quelconque des revendications 1 à 13, **caractérisé en ce que** ledit élément de support (2) présentant la surface de base (3) est tourné autour d'un axe de rotation (11) et de préférence est déplacée le long de l'axe de rotation (11) pendant l'application de matériau et éventuellement pendant la solidification des matériaux (4, 5).
